(19) Europäisches Patentamt

European Patent Office

Office européen des brevets

(11) **EP 4 277 421 A1**

(12) **EUROPEAN PATENT APPLICATION**
published in accordance with Art. 153(4) EPC

(43) Date of publication:
**15.11.2023 Bulletin 2023/46**

(21) Application number: **21918628.5**

(22) Date of filing: **15.01.2021**

(51) International Patent Classification (IPC):
*H04W 74/08* (2009.01)

(52) Cooperative Patent Classification (CPC):
**H04W 74/08**

(86) International application number:
**PCT/CN2021/072309**

(87) International publication number:
**WO 2022/151424 (21.07.2022 Gazette 2022/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Shenzhen, Guangdong 518129 (CN)**

(72) Inventors:
• **YAN, Mao
Shenzhen, Guangdong 518129 (CN)**
• **LIU, Fengwei
Shenzhen, Guangdong 518129 (CN)**
• **XU, Minghui
Shenzhen, Guangdong 518129 (CN)**

(74) Representative: **Huawei European IPR
Huawei Technologies Duesseldorf GmbH
Riesstraße 25
80992 München (DE)**

(54) **RANDOM ACCESS METHOD AND APPARATUS THEREFOR**

(57) This application discloses a random access method and a corresponding apparatus. The method includes: A terminal device determines, based on a measurement result of a synchronization signal/physical broadcast channel block SS/PBCH block, a random access opportunity and a random access preamble that are associated with the synchronization signal/physical broadcast channel block. The terminal device sends a random access signal based on the random access opportunity and the random access preamble. There is a correspondence between the random access opportunity and/or the random access preamble and at least one of the following: a data subcarrier spacing $\Delta f^{Data}$, or a ratio $\Delta f^{Data}/\Delta f^{RA}$ of a random access subcarrier spacing $\Delta f^{RA}$ to the data subcarrier spacing $\Delta f^{Data}$. At least one of the random access subcarrier spacing $\Delta f^{RA}$ and the data subcarrier spacing $\Delta f^{Data}$ is greater than 120 kHz. This application provides a design of a random access signal based on a large subcarrier spacing, to improve communication performance.

FIG. 4

## Description

**TECHNICAL FIELD**

This application relates to the field of communication technologies, and in particular, to a method for enhancing a random access mechanism and a corresponding apparatus.

**BACKGROUND**

A future communication system is expanded to 52.6 GHz or higher. Because a carrier frequency is higher, a larger subcarrier spacing needs to be used, and a current frame structure becomes more compact (a shorter OFDM symbol, a shorter cyclic prefix, and/or shorter slot duration). Therefore, how to design a random access preamble format based on a large subcarrier spacing is a problem to be urgently resolved.

**SUMMARY**

This application provides a random access method, a communication apparatus, and a related device, and provides a random access method in a spectrum higher than 52.6 GHz, to optimize a design of random access time or a random access preamble, and improve communication efficiency.

According to a first aspect, this application provides a random access method. The method may be performed by a communication apparatus, for example, a terminal device, and the method includes: determining, by the communication apparatus based on a measurement result of a synchronization signal/physical broadcast channel block SS/PBCH block, a random access opportunity and a random access preamble that are associated with the synchronization signal/physical broadcast channel block; and sending, by the communication apparatus, a random access signal based on the random access opportunity and the random access preamble. There is a correspondence between the random access opportunity and/or the random access preamble and at least one of the following: a random access subcarrier spacing $\Delta f^{RA}$, a data subcarrier spacing $\Delta f^{Data}$, or a ratio $\Delta f^{Data}/\Delta f^{RA}$ of the random access subcarrier spacing $\Delta f^{RA}$ to the data subcarrier spacing $\Delta f^{Data}$. At least one of the random access subcarrier spacing $\Delta f^{RA}$ and the data subcarrier spacing $\Delta f^{Data}$ is greater than 120 kHz.

According to a second aspect, this application provides a random access method. The method may be performed by a communication apparatus, for example, a network device, and the method includes: sending, by the communication apparatus, a synchronization signal/physical broadcast channel block; and receiving, by the communication apparatus, a random access signal. The random access signal is sent based on a random access opportunity and a random access preamble, and the random access opportunity and the random access preamble are associated with the synchronization signal/physical broadcast channel block. There is a correspondence between the random access opportunity and/or the random access preamble and at least one of the following: a data subcarrier spacing $\Delta f^{Data}$, or a ratio $\Delta f^{Data}/\Delta f^{RA}$ of a random access subcarrier spacing $\Delta f^{RA}$ to the data subcarrier spacing $\Delta f^{Data}$. At least one of the random access subcarrier spacing $\Delta f^{RA}$ and the data subcarrier spacing $\Delta f^{Data}$ is greater than 120 kHz.

In the following embodiments, a plurality of methods for adjusting a length of each field in a random access preamble format are designed to focus on reducing random access duration $N_{dur}^{RA}$ or guard time GT. This not only ensures random access preamble detection performance, but also resolves a problem of resource waste caused by application of an existing design in a high frequency field, and improves resource utilization.

In some possible designs, the random access opportunity includes the random access duration. The following provides random access duration in several different ratios $\Delta f^{Data}/\Delta f^{RA}$ of the random access subcarrier spacing $\Delta f^{RA}$ to the data subcarrier spacing $\Delta f^{Data}$.

Manner 1:

When the ratio $\Delta f^{Data}/\Delta f^{RA}$ is 4, random access duration $N_{dur}^{RA}$ is any one of 5.25, 5.5, or 5.75; or when the ratio $\Delta f^{Data}/\Delta f^{RA}$ is 8, random access duration $N_{dur}^{RA}$ is any one of 5.5, 5.625, or 5.75. It can be learned that the random access duration $N_{dur}^{RA}$ and the ratio $\Delta f^{Data}/\Delta f^{RA}$ of the random access subcarrier spacing to the data subcarrier spacing meet the following correspondence. A unit of the random access duration $N_{dur}^{RA}$ is orthogonal frequency division multiplexing OFDM symbol time corresponding to the random access subcarrier spacing $\Delta f^{RA}$.

| $\Delta f^{Data}/\Delta f^{RA}$ | 1 | 2 | 4 | 8 |
|---|---|---|---|---|
| Random access duration $N_{dur}^{RA}$ | 6 | 6 | 5.25, 5.5, or 5.75 | 5.5, 5.625, or 5.75 |

Manner 2:

When the ratio $\Delta f^{Data}/\Delta f^{RA}$ is 4, random access duration $N_{dur}^{RA}$ is any one of 21, 22, or 23; or when the ratio $\Delta f^{Data}/\Delta f^{RA}$ is 8, random access duration $N_{dur}^{RA}$ is any one of 44, 45, or 46. A unit of the random access duration $N_{dur}^{RA}$ is an OFDM symbol corresponding to the data subcarrier spacing $\Delta f^{Data}$. It can be learned that the random access duration $N_{dur}^{RA}$ and the ratio $\Delta f^{Data}/\Delta f^{RA}$ of the random access subcarrier spacing to the data subcarrier spacing meet the following correspondence. A unit of the random access duration $N_{dur}^{RA}$ is OFDM symbol time corresponding to the data subcarrier spacing $\Delta f^{Data}$.

| $\Delta f^{Data}/\Delta f^{RA}$ | 1 | 2 | 4 | 8 |
|---|---|---|---|---|
| Random access duration $N_{dur}^{RA}$ | 6 | 12 | 21, 22, or 23 | 44, 45, or 46 |

When the random access subcarrier spacing $\Delta f^{RA}$ is equal to 120 kHz, the random access duration $N_{dur}^{RA}$ and the data subcarrier spacing $\Delta f^{Data}$ meet the following correspondence. The unit of the random access time $N_{dur}^{RA}$ is the OFDM symbol time corresponding to the random access subcarrier spacing $\Delta f^{RA}$.

| $\Delta f^{Data}$ (kHz) | 120 | 240 | 480 | 960 |
|---|---|---|---|---|
| Random access time $N_{dur}^{RA}$ | 6 | 6 | 5.25, 5.5, or 5.75 | 5.5, 5.625, or 5.75 |

When the random access subcarrier spacing $\Delta f^{RA}$ is equal to 120 kHz, the random access duration $N_{dur}^{RA}$ and the data subcarrier spacing $\Delta f^{Data}$ meet the following correspondence. The unit of the random access time $N_{dur}^{RA}$ is the OFDM symbol time corresponding to the data subcarrier spacing $\Delta f^{Data}$.

| $\Delta f^{Data}$ (kHz) | 120 | 240 | 480 | 960 |
|---|---|---|---|---|
| Random access time $N_{dur}^{RA}$ | 6 | 12 | 21, 22, or 23 | 44, 45, or 46 |

In some possible designs, guard time GT is further included after the random access preamble and before an uplink or a downlink OFDM symbol. The following provides several different types of guard time.

Manner 1:

A unit of the guard time GT is the OFDM symbol time corresponding to the data subcarrier spacing $\Delta f^{Data}$, and when the ratio $\Delta f^{Data}/\Delta f^{RA}$ is 4, the guard time GT is any one of 0.25 or 0.5; or when the ratio $\Delta f^{Data}/\Delta f^{RA}$ is 8, the guard time GT is any one of 0.125, 0.25, 0.375, or 0.5. It can be learned that the guard time GT and the ratio $\Delta f^{Data}/\Delta f^{RA}$ of the random access subcarrier spacing to the data subcarrier spacing meet the following correspondence:

| $\Delta f^{Data}/\Delta f^{RA}$ | 1 | 2 | 4 | 8 |
|---|---|---|---|---|
| Guard time GT | 1 | 0.5 | 0.25 or 0.5 | 0.125, 0.25, 0.375, or 0.5 |

Manner 2:

A unit of the guard time GT is the OFDM symbol time corresponding to the data subcarrier spacing $\Delta f^{Data}$, and when the ratio $\Delta f^{Data}/\Delta f^{RA}$ is 4, the guard time GT is any one of 1 or 2; or when the ratio $\Delta f^{Data}/\Delta f^{RA}$ is 8, the guard time GT is any one of 1, 2, 3, or 4. It can be learned that the guard time GT and the ratio $\Delta f^{Data}/\Delta f^{RA}$ of the random access subcarrier spacing to the data subcarrier spacing meet the following correspondence:

| $\Delta f^{Data}/\Delta f^{RA}$ | 1 | 2 | 4 | 8 |
|---|---|---|---|---|
| Guard time GT | 1 | 1 | 1 or 2 | 1, 2, 3, or 4 |

That the random access subcarrier spacing $\Delta f^{RA}$ is equal to 120 kHz is used as an example. Guard time GT and the data subcarrier spacing $\Delta f^{Data}$ meet the following correspondence. A unit of the guard time GT is the OFDM symbol time corresponding to the random access subcarrier spacing $\Delta f^{RA}$.

| $\Delta f^{Data}(kHz)$ | 120 | 240 | 480 | 960 |
|---|---|---|---|---|
| Guard time GT | 1 | 0.5 | 0.25 or 0.5 | 0.125, 0.25, 0.375, or 0.5 |

Manner 3:

That the random access subcarrier spacing $\Delta f^{RA}$ is equal to 120 kHz is used as an example. Guard time GT and the data subcarrier spacing $\Delta f^{Data}$ meet the following correspondence. A unit of the guard time GT is the OFDM symbol time corresponding to the data subcarrier spacing $\Delta f^{Data}$.

| $\Delta f^{Data}(kHz)$ | 120 | 240 | 480 | 960 |
|---|---|---|---|---|
| Guard time GT | 1 | 1 | 2 or 4 | 1, 2, 3, or 4 |

In a possible design, the random access preamble further includes a random access preamble length $N_u$, and the random access preamble length $N_u$ is determined based on a first factor $\mu_0$. The first factor $\mu_0$ is determined based on at least one of the following: the random access subcarrier spacing $\Delta f^{RA}$, the data subcarrier spacing $\Delta f^{Data}$, or the ratio $\Delta f^{Data}/\Delta f^{RA}$ of the random access subcarrier spacing $\Delta f^{RA}$ to the data subcarrier spacing $\Delta f^{Data}$, where $\mu_0$ is equal to 1, 2, or 4.

Optionally, random access preamble duration $N_u$ is determined based on the first factor $\mu_0$ and a second factor $\mu$, where $\mu$ is equal to 0, 1, 2, or 3.

In a possible design, the communication apparatus provided in the first aspect further receives an extended configuration index from a network device. The extended configuration includes a correspondence between the first factor $\mu_0$ and at least one of the following: the random access subcarrier spacing $\Delta f^{RA}$, the data subcarrier spacing $\Delta f^{Data}$, or the ratio $\Delta f^{Data}/\Delta f^{RA}$ of the random access subcarrier spacing $\Delta f^{RA}$ to the data subcarrier spacing $\Delta f^{Data}$.

The data subcarrier spacing may be a subcarrier spacing of an initial access uplink bandwidth part BWP, a subcarrier spacing of an initial downlink BWP, or a subcarrier spacing of a BWP in a first random access opportunity.

The random access subcarrier spacing may be any one in {120 kHz, 240 kHz, 480 kHz, 960 kHz, 1920 kHz, 3840 kHz, 7680 kHz}.

When the data subcarrier spacing $\Delta f^{Data}$ is 120 kHz, the random access subcarrier spacing $\Delta f^{RA}$ may be any one in a set {240 kHz, 480 kHz, 960 kHz, 1920 kHz, 3840 kHz, 7680 kHz}.

When the random access subcarrier spacing $\Delta f^{RA}$ is 120 kHz, the data subcarrier spacing $\Delta f^{Data}$ may be any one in a set {240 kHz, 480 kHz, 960 kHz, 1920 kHz, 3840 kHz, 7680 kHz}.

The ratio $\Delta f^{Data}/\Delta f^{RA}$ of the random access subcarrier spacing $\Delta f^{RA}$ to the data subcarrier spacing $\Delta f^{Data}$ is greater than or equal to R, and R is any one in a set {1, 2, 4, 816, 32}.

According to a third aspect, an embodiment of this application provides a first communication apparatus, configured to perform the method in the first aspect or any possible implementation of the first aspect. Optionally, the first communication apparatus may be a terminal device, or an apparatus integrated into a terminal device.

The first communication apparatus includes a corresponding unit that performs the method in the first aspect or any possible implementation of the first aspect. For example, the first communication apparatus may include a transceiver unit and a processing unit.

According to a fourth aspect, an embodiment of this application further provides a second communication apparatus, configured to perform the method in the second aspect or any possible implementation of the second aspect. Optionally, the second communication apparatus may be a network device, or may be an apparatus integrated into a network device.

The second communication apparatus includes a corresponding unit that performs the method in the second aspect or any possible implementation of the second aspect. For example, the second communication apparatus may include a transceiver unit and a processing unit.

According to a fifth aspect, an embodiment of this application provides a third communication apparatus. The communication apparatus includes a processor, configured to perform the method shown in any one of the first aspect or the possible implementations of the first aspect. Optionally, the third communication apparatus may be a terminal device, or may be a chip, a chip system, a processor, or the like that can support a terminal device in implementing the foregoing method.

In a process of performing the foregoing method, a process of sending a signal and/or receiving a signal and the like in the foregoing method may be understood as a process of outputting a signal by the processor and/or a process of receiving an input signal by the processor. When outputting a signal, the processor may output the signal to a transceiver, so that the transceiver transmits the signal. After the signal is output by the processor, other processing may be required before the signal reaches the transceiver. Similarly, when the processor receives an input signal, the transceiver receives the signal and inputs the signal to the processor. Further, after the transceiver receives the signal, other processing may need to be performed on the signal, and then the signal is input to the processor.

Based on the foregoing principle, for example, the sending a signal mentioned in the foregoing method may be understood as that the processor outputs a signal. For another example, the receiving a signal may be understood as that the processor receives an input signal.

Operations such as transmitting, sending, and receiving involved in the processor may be more generally understood as, unless otherwise specified, or if the operations do not conflict with actual functions or internal logic in related descriptions of the operations, operations such as output, receiving, and input of the processor, rather than operations such as transmitting, sending, and receiving directly performed by a radio frequency circuit and an antenna.

In an implementation process, the foregoing processor may be a processor specifically configured to perform these methods, or may be a processor, for example, a general-purpose processor, that executes computer instructions in a memory to perform these methods. The memory may be a non-transitory (non-transitory) memory, for example, a read-only memory (read-only memory, ROM), and may be integrated on a same chip with a processor, or the memory and the processor may be separately disposed on different chips. A type of the memory and a manner of setting the memory and the processor are not limited in this embodiment of this application.

In a possible implementation, the memory is located outside the third communication apparatus.

In a possible implementation, the memory is located in the third communication apparatus.

In this application, the processor and the memory may alternatively be integrated into one component, that is, the processor and the memory may alternatively be integrated.

In a possible implementation, the third communication apparatus further includes a transceiver, and the transceiver is configured to receive a signal and/or send a signal. For example, the transceiver may be configured to receive a signal, send a signal, or the like.

According to a sixth aspect, an embodiment of this application provides a fourth communication apparatus. The fourth communication apparatus includes a processor, configured to execute a program stored in a memory. When the program is executed, the fourth communication apparatus performs the method shown in any one of the second aspect or the possible implementations of the second aspect. The fourth communication apparatus may be a network device, or may be a chip, a chip system, a processor, or the like that can support a network device in implementing the foregoing method.

It may be understood that for the description of the processor, refer to the description of the fifth aspect. Details are not described herein again.

In a possible implementation, the memory is located outside the fourth communication apparatus.

In a possible implementation, the memory is located in the fourth communication apparatus.

In a possible implementation, the fourth communication apparatus further includes a transceiver, and the transceiver is configured to receive a signal and/or send a signal. For example, the transceiver may be configured to send a signal, receive a signal, or the like.

According to a seventh aspect, this application provides a chip. The chip includes a logic circuit and an interface, and the logic circuit is coupled to the interface. The interface is configured to determine a first periodicity. The logic circuit is configured to send at least two first signals based on the first periodicity, where one first signal corresponds to one beam of a network device.

It may be understood that for a specific implementation of the logic circuit and the interface, refer to the following apparatus embodiments. Details are not described herein again.

According to an eighth aspect, this application provides a chip. The chip includes a logic circuit and an interface, and the logic circuit is coupled to the interface. The logic circuit is configured to monitor a first signal based on a first periodicity. The interface is configured to receive the first signal.

It may be understood that for a specific implementation of the logic circuit and the interface, refer to the following apparatus embodiments. Details are not described herein again.

According to a ninth aspect, this application provides a computer-readable storage medium. The computer-readable storage medium is configured to store a computer program. When the computer program runs on a computer, the method shown in any one of the first aspect or the possible implementations of the first aspect is enabled to be performed.

According to a tenth aspect, this application provides a computer-readable storage medium. The computer-readable storage medium is configured to store a computer program. When the computer program runs on a computer, the method shown in any one of the second aspect or the possible implementations of the second aspect is enabled to be performed.

According to an eleventh aspect, this application provides a computer program product. The computer program product includes a computer program or computer code. When the computer program product runs on a computer, the method shown in any one of the first aspect or the possible implementations of the first aspect is enabled to be performed.

According to a twelfth aspect, this application provides a computer program product. The computer program product includes a computer program or computer code. When the computer program product runs on a computer, the method shown in any one of the second aspect or the possible implementations of the second aspect is enabled to be performed.

According to a thirteenth aspect, an embodiment of this application provides a computer program. When the computer program runs on a computer, the method shown in any one of the first aspect or the possible implementations of the first aspect is performed.

According to a fourteenth aspect, this application provides a computer program. When the computer program runs on a computer, the method shown in any one of the second aspect or the possible implementations of the second aspect is performed.

According to a fifteenth aspect, this application provides a communication system. The communication system includes a first network device and a third network device. The first network device is configured to perform the method shown in any one of the first aspect or the possible implementations of the first aspect. The third network device is configured to perform the method shown in any one of the second aspect or the possible implementations of the second aspect.

## BRIEF DESCRIPTION OF DRAWINGS

FIG. 1 is a schematic diagram of a communication system applicable to this application;
FIG. 2 is a simplified schematic diagram of a random access preamble according to this application;
FIG. 3 is a signaling interaction diagram of a random access process according to this application;
FIG. 4 is a flowchart of a random access method according to this application; and
FIG. 5 to FIG. 9 are schematic diagrams of communication apparatuses according to this application.

## DESCRIPTION OF EMBODIMENTS

The following describes technical solutions in this application with reference to the accompanying drawings.

The technical solutions in embodiments of this application may be applied to various communication systems, for example, a long term evolution (long term evolution, LTE) system, a fifth generation (5th generation, 5G) system, a new radio (new radio, NR) system, or another communication system that may appear in the future.

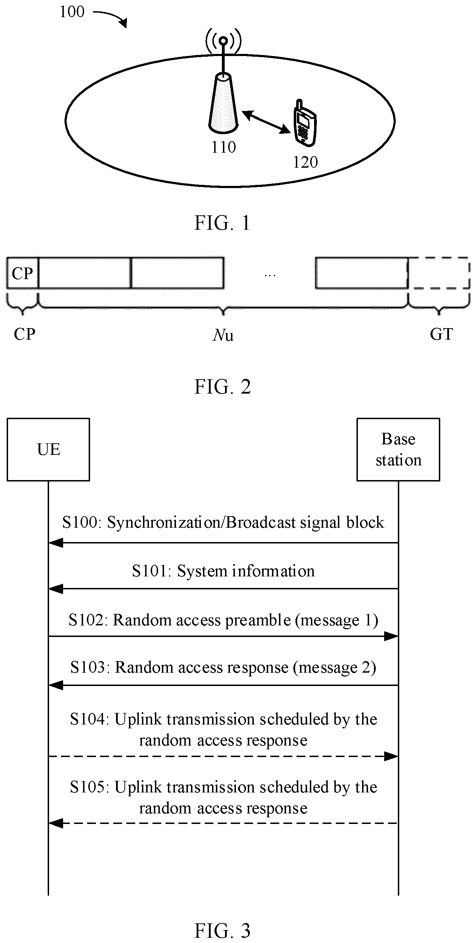

FIG. 1 is a schematic diagram of a communication system applicable to this application. As shown in FIG. 1, the communication system 100 may include at least one network device, for example, a network device 110 shown in FIG. 1. The communication system 100 may further include at least one terminal device, for example, a terminal device 120 shown in FIG. 1.

The terminal device in embodiments of this application may be user equipment (user equipment, LTE), an access terminal, a subscriber unit, a subscriber station, a mobile station, a mobile console, a remote station, a remote terminal, a mobile device, a user terminal, a terminal, a wireless communication device, a user agent, or a user apparatus. The terminal device may also be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), or the like. This is not limited in embodiments of this application.

The network device in embodiments of this application may be a device configured to communicate with a terminal device. For example, the network device may be a base station (base station), an evolved NodeB (evolved NodeB, eNodeB), a transmission reception point (transmission reception point, TRP), a next generation NodeB (next generation NodeB, gNB) in a 5G mobile communication system, a base station in a future mobile communication system, an access node in a Wi-Fi system, or the like. For another example, the network device may alternatively be a module or a unit that implements some functions of a base station, for example, may be a central unit (central unit, CU) or a distributed unit (distributed unit, DU). For another example, the network device may alternatively be a radio controller, a relay station, an access point, a vehicle-mounted device, a wearable device, an access network device in another future evolved communication system, or the like in a cloud radio access network (cloud radio access network, CRAN) scenario. A specific technology and a specific device form used by the network device are not limited in this application.

In embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main storage). The operating system may include any one or more computer operating systems that implement service processing by using a process (process), for example, a Linux operating system, a Unix operating system, an Android operating system, an iOS operating system, or a windows operating system. The application layer includes applications such as a browser, an address book, word processing software, and instant messaging software. In addition, a specific structure of an execution body of the method provided in embodiments of this application is not particularly limited in embodiments of this application, provided that communication can be performed according to the method provided in embodiments of this application by running a program that records code of the method provided in embodiments of this application. For example, the method provided in embodiments of this application may be executed by a terminal device or a network device, or a function module that is in the terminal device or the network device and that can invoke a program and execute the program.

In addition, various aspects or features of this application may be implemented as methods, apparatuses, or products using standard programming and/or engineering techniques. A term "product" used in this application covers a computer program accessible from any computer-readable device, carrier, or medium. For example, a computer-readable medium may include, but is not limited to: a magnetic storage device (for example, a hard disk, a floppy disk, or a magnetic tape), an optical disc (for example, a compact disc (compact disc, CD), or a digital versatile disc (digital versatile disc, DVD)), a smart card, and a flash memory device (for example, an erasable programmable read-only memory (erasable programmable read-only memory, EPROM), a card, a stick, or a key drive). In addition, various storage media described in this specification may represent one or more devices and/or other machine-readable media for storing information. A term "machine-readable media" may include, but is not limited to, wireless channels and various other media capable of storing, containing, and/or carrying instructions and/or data.

To facilitate understanding of embodiments in this application, some concepts or terms in this application are briefly described first.

1. Random access (random access, RA)

The random access is an information exchange mechanism (or process) used to establish a connection between a device accessing a wireless network and a network in a communication system involving access control, for example, an LTE or a 5G communication system. A random access process is carried through a random access channel (random access channel, RACH) or a physical random access channel (physical random access channel, PRACH), and may be classified into contention-based random access and non-contention-based random access. The contention-based random access may include four steps, which may be referred to as "four-step random access". Each step corresponds to one message. A message 1, a message 2, a message 3, and a message 4 are included and respectively carry different signaling or information. The non-contention-based random access includes first two steps of the four-step random access. In some other implementations, the contention-based random access may further include two steps, which may be referred to as "two-step random access". Each step corresponds to one message. A message A and a message B are included. The message A includes a preamble and first data information (for example, similar to the message 1 and message 3 in the four-step random access). The message B includes contention resolution and uplink scheduling (for example, similar to the message 2 and message 4 in the four-step random access). Compared with the four-step random access, the two-step random access has shorter access time.

2. Message 1 (message 1, Msg1)

The message 1, namely, a random access preamble (random access preamble), is specifically a random access preamble sequence (random access preamble sequence), and is carried through a RACH or a PRACH. The message 1 may be used to initiate a connection request, a handover request, a synchronization request, and a scheduling request between a device and a network.

3. Message 2 (message 2, Msg2)

The message 2 may be referred to as a random access response (random access response, RAR) message, and is a response of a network side to the received message 1. One message 2 may include a plurality of responses to the Msg1. For a single random access preamble, media access control (media access control, MAC) has a specific random access response message. A network device encapsulates responses to all random access preambles detected on a random access opportunity to form the Msg2. In this way, after sending a random access preamble, a terminal device searches the corresponding message 2 for a random access response message corresponding to the random access preamble sent by the terminal device, and ignores a response message for another random access preamble.
If receiving the message 1, the network device encapsulates at least one piece of the following information into one random access response for sending: an index (random access preamble identifier, RAPID) of the message 1, an uplink scheduling grant (an uplink grant, UL grant), timing advance (timing advance, TA), a temporary cell radio network temporary identifier (temporary cell radio network temporary identifier, TC-RNTI), and the like. One Msg2 may include a plurality of RARs in the network device, that is, the one Msg2 simultaneously responds to a plurality of Msg1s.

4. Message 3 (message 3, Msg3)

The message 3 is also referred to as first uplink scheduling transmission, and is transmission scheduled by the UL grant in the message 2, or retransmission scheduled by downlink control information (downlink control information, DCI) scrambled by the TC-RNTI. Transmission content of the Msg3 is a high-layer message, for example, a connection setup request message (for example, identification information of a user that initiates a connection request). The message 3 is used for contention resolution. If a plurality of different devices use a same Msg1 to perform random access, whether a conflict exists may be determined based on the Msg3 and a Msg4 together. As part of the random access process, the message 3 is transmitted through an uplink shared channel (uplink shared channel, LTL-SCH), including a cell radio network temporary identifier (cell radio network temporary identifier, C-RNTI), a MAC control element (MAC control element, MAC CE), or a common control channel (common control channel, CCCH). The message 3 is submitted by a high layer and associated with a user equipment contention resolution identity (UE Contention Resolution Identity).

4. Message 4 (message 4, Msg4)

The message 4 is used for contention resolution, and may include a common control channel service data unit (CCCH common control channel, CCCH SDU) carried in the message 3. If the terminal device detects, in the message 4, a CCCH SDU sent by the terminal device, it is considered that contention-based random access succeeds, and the terminal device continues to perform a subsequent communication process. The message 4 has retransmission, that is, a corresponding physical uplink control channel (physical uplink control channel, PUCCH) transmits feedback information (whether the terminal device successfully detects the message 4). Power control is performed for sending the feedback information by the terminal device through the PUCCH.

5. Random access opportunity

The random access opportunity is also referred to as a random access resource (a RACH resource) or a random access occasion (a RACH occasion/RACH transmission occasion/RACH opportunity/RACH chance, RO), and is time and a frequency resource used to carry one or more random access preambles. Logically, one random access opportunity is used to carry information/a signal of a physical random access channel (physical random access channel, PRACH). Alternatively, the random access opportunity may also be referred to as a physical random access opportunity (a PRACH occasion, RO) or a physical random access resource (a PRACH resource).

6. Random access preamble format

The random access preamble format may be determined based on the following parts: a random access preamble sequence length, a subcarrier spacing for carrying a random access preamble, a cyclic prefix (cyclic prefix, CP), random access preamble duration (or may be understood as random access preamble sequence duration) and a guard interval or random access preamble duration, where either the guard interval or the random access preamble duration is selected. In an implementation, the random access preamble format is determined based on the following five parts: a preamble sequence length, a subcarrier spacing, a cyclic prefix, duration (or sequence duration), and a guard interval. The random access preamble duration may be separately defined, and may be referred to as "PRACH duration" or total duration of the random access opportunity. FIG. 2 is a schematic diagram of a random access preamble. CP represents a cyclic prefix, $N_u$ represents random access preamble duration, and GT represents guard time. The guard time (guard time, GT) is optional.

The following Table 1 shows four random access preamble formats (formats), where $L_{RA}$ represents a random access preamble sequence length, $\Delta f^{RA}$ represents a random access subcarrier spacing, $N_{CP}^{RA}$ represents a random access subcarrier spacing, $N_u$ represents random access preamble duration (represented by a quantity of reference time sampling points, also referred to as "random access sequence duration"), and $N_{CP}^{RA}$ represents a cyclic prefix length of a random access preamble. Preamble sequence lengths $L_{RA}$ of the four random access preamble formats all are 839. A maximum subcarrier spacing in subcarrier spacings corresponding to formats 1 to 3 is four times a minimum subcarrier spacing. A frequency domain width corresponding to a random access subcarrier spacing $\Delta f^{RA}$ of 1.25 kHz is 1.25×864 kHz, and a frequency domain width corresponding to a random access subcarrier spacing $\Delta f^{RA}$ of 5 kHz is 5×864 kHz. Duration of a format 0 and the format 3 is 1 ms, duration of the format 1 is 3 ms, and duration of the format 2 is 3.5 ms. A last column Support for restricted sets represents a restriction set type supported by a preamble sequence. Different types are used for different mobility/doppler shift values.

**Table 1**

| Format | $L_{RA}$ | $\Delta f^{RA}$ | $N_u$ | $N_{CP}^{RA}$ | Support for restricted sets Support for restricted sets |
|---|---|---|---|---|---|
| 0 | 839 | 1.25 kHz | $24576\kappa$ | $3168\kappa$ | Type A, Type B |
| 1 | 839 | 1.25 kHz | $2 \cdot 24576\kappa$ | $21024\kappa$ | Type A, Type B |
| 2 | 839 | 1.25 kHz | $4 \cdot 24576\kappa$ | $4688\kappa$ | Type A, Type B |
| 3 | 839 | 5 kHz | $4 \cdot 6144\kappa$ | $3168\kappa$ | Type A, Type B |

The following Table 2 shows other nine random access preamble formats. In the table, random access preamble sequence lengths $L_{RA}$ are 139/1151/571 and are obtained by repeating different quantities of preamble OFDM symbols.

**Table 2**

| Format | $L_{RA}$ | | | $\Delta f^{RA}$ | $N_u$ | $N_{CP}^{RA}$ | Support for restricted sets Support for restricted sets | $N_{dur}^{RA}$ PRACH duration Random access duration |
|---|---|---|---|---|---|---|---|---|
| | $\mu \in \{0, 1, 2, 3\}$ | $\mu = 0$ | $\mu = 1$ | | | | | |
| A1 | 139 | 1151 | 571 | $15 \cdot 2^\mu$ kHz | $2 \cdot 2048\kappa \cdot 2^{-\mu}$ | $288\kappa \cdot 2^{-\mu}$ | - | 2 |
| A2 | 139 | 1151 | 571 | $15 \cdot 2^\mu$ kHz | $4 \cdot 2048\kappa \cdot 2^{-\mu}$ | $576\kappa \cdot 2^{-\mu}$ | - | 4 |
| A3 | 139 | 1151 | 571 | $15 \cdot 2^\mu$ kHz | $6 - 2048\kappa \cdot 2^{-\mu}$ | $864\kappa \cdot 2^{-\mu}$ | - | 6 |

(continued)

| Format | $L_{RA}$ | | | $\Delta f^{RA}$ | $N_u$ | $N_{CP}^{RA}$ | Support for restricted sets Support for restricted sets | $N_{dur}^{RA}$ PRACH duration Random access duration |
|---|---|---|---|---|---|---|---|---|
| | $\mu\in\{0,1,2,3\}$ | $\mu=0$ | $\mu=1$ | | | | | |
| B1 | 139 | 1151 | 571 | $15 \cdot 2^{\mu}$ kHz | $2 \cdot 2048\kappa \cdot 2^{-\mu}$ | $216\kappa \cdot 2^{-\mu}$ | - | 2 |
| B2 | 139 | 1151 | 571 | $15 \cdot 2^{\mu}$ kHz | $4 \cdot 2048\kappa \cdot 2^{-\mu}$ | $360\kappa \cdot 2^{-\mu}$ | - | 4 |
| B3 | 139 | 1151 | 571 | $15 \cdot 2^{\mu}$ kHz | $6 \cdot 2048\kappa \cdot 2^{-\mu}$ | $504\kappa \cdot 2^{-\mu}$ | - | 6 |
| B4 | 139 | 1151 | 571 | $15 \cdot 2^{\mu}$ kHz | $12 \cdot 2048\kappa \cdot 2^{-\mu}$ | $936\kappa \cdot 2^{-\mu}$ | - | 12 |
| C0 | 139 | 1151 | 571 | $15 \cdot 2^{\mu}$ kHz | $2048\kappa \cdot 2^{-\mu}$ | $1240\kappa \cdot 2^{-\mu}$ | - | 2 |
| C2 | 139 | 1151 | 571 | $15 \cdot 2^{\mu}$ kHz | $4 \cdot 2048\kappa \cdot 2^{-\mu}$ | $2048\kappa \cdot 2^{-\mu}$ | | 6 |

7. Sending power

The sending power is also referred to as output power, and may be output power that is obtained through measurement on all or some frequencies, frequency bands, or bandwidths supported by the network device or the terminal device in given time and/or a given periodicity. For example, measurement time is at least 1 ms, or measurement time is at least one slot corresponding to a subcarrier spacing. In an embodiment, power obtained in measurement time of at least 1 ms is used.

8. Orthogonal frequency division multiplexing (orthogonal frequency division multiplexing, OFDM)

The OFDM is a multi-carrier transmission waveform of frequency division multiplexing. Signals (also called carriers/subcarriers) involved in multiplexing are orthogonal. An OFDM technology converts high-speed data streams into parallel low-speed data streams through serial/parallel conversion, and then allocates the data streams to several subcarriers with different frequencies for transmission. The OFDM technology utilizes mutually orthogonal subcarriers, so that spectrums of the subcarriers are overlapped.

9. Subcarrier spacing (subcarrier spacing, SCS)

The subcarrier spacing is a type of a waveform parameter (numerology) in a communication system, for example, an OFDM-based communication system (for example, 5G). The numerology may be defined by using one or more of the following parameter information: a subcarrier spacing, a cyclic prefix, a time unit, a bandwidth, and the like. For example, the numerology may be defined by the subcarrier spacing and the CP. CP information may include a CP length and/or a CP type. For example, the CP may be a normal CP (normal CP, NCP) or an extended CP (extended CP, ECP). The time unit is used to represent a time unit in time domain, and may be, for example, a sampling point, a symbol, a mini-slot, a slot, a subframe, or a radio frame. Time unit information may include a type, a length, a structure, or the like of the time unit. For example, some possible parameters are shown in Table 3.

**Table 3**

| $\mu$ | $\Delta f = 2^{\mu} \cdot 15$ [kHz] |
|---|---|
| 0 | 15 |
| 1 | 30 |
| 2 | 60 |
| 3 | 120 |
| 4 | 240 |
| 5 | 480 |
| 6 | 960 |
| 7 | 1920 |
| 8 | 3840 |
| 9 | 7680 |

Herein, $\mu$ is the subcarrier spacing and the CP corresponding to 0, 1, 2, 3, 4, 5, 6, 7, 8, or 9. It may be understood that the subcarrier spacing may have another value, and this is not limited. In some implementations, only $\mu$=0, 1, 2, 3, or 4 is supported.

10. Discrete Fourier Transformation spreading Orthogonal Frequency Division Multiplexing (Discrete Fourier Transformation spreading OFDM, DFT-s-OFDM)

The DFT-s-OFDM is a derivative technology based on the OFDM. Intuitively, DFT processing is performed on a subcarrier used by each user, and the subcarrier is converted from time domain to frequency domain. Then, OFDM modulation is performed on a frequency domain signal of each user (that is, the frequency domain signal is input to an IFFT module). In this way, signals of users are converted to time domain and sent together. After improvement of DFT, the signal is converted from a frequency domain signal (traditional OFDM) to a time domain signal.

11. Reference signal (reference signal, RS)

Based on a function, the reference signal may include a demodulation reference signal (demodulation reference signal, DMRS), a channel state information reference signal (channel state information reference signal, CSI-RS), a phase tracking reference signal (phase tracking reference signal, PTRS), a channel sounding reference signal (sounding reference signal, SRS), and the like. The reference signal means that a transmitting end or a receiving end may infer, according to a known or preset rule, time and a frequency location of a signal, and a signal/symbol carried in the time and a frequency. The reference signal is used to obtain a known signal that affects by an outside (that is, a channel) (for example, a spatial channel, or a non-ideal component at a transmitting end or receiving end) during transmission, and is generally used for channel estimation, auxiliary signal demodulation, and detection. For example, the DMRS and the CSI-RS are used to obtain channel information, and the PTRS is used to obtain phase change information.

Next, an initial access process of a wireless communication system is described from a perspective of signaling interaction by using a base station and LTE as an example. As shown in FIG. 3, the initial access process includes the following steps.

S100: A base station sends a synchronization signal or a reference signal. The synchronization signal is a synchronization/broadcast signal block (synchronization signal/physical broadcast channel block, SS/PBCH block, or SSB), also referred to as a synchronization signal block, which is periodically sent by the base station. The synchronization signal block includes a physical broadcast channel (physical broadcast channel, PBCH), a primary synchronization signal (primary synchronization signal, PSS), and a secondary synchronization signal (secondary synchronization signal, SSS). Content carried by the PBCH includes a master system information block (master information block, MIB), and the MIB indicates search space (search space) of a system information block 1 (system information block 1, SIB1). After being powered on or when re-accessing a network, the LTE scans a synchronization signal of a network device, to perform downlink time and frequency synchronization, and receive random access resource configuration information. Optionally, the LTE may further perform a beam handover or a cell handover based on the reference signal sent by the base station, for example, a CSI-RS.

S101: The base station sends system information at a specific location, where a signal that carries the system information is also referred to as a system information block (system information block, SIB). For example, the base station may send the system information through a broadcast.

S102: The LTE selects, based on the random access resource configuration information and the synchronized synchronization signal block, a random access resource associated with the synchronization signal block, where the random access resource includes a time domain resource, a frequency resource, and a code domain resource (namely, a random access preamble sequence), and sends a random access signal, also understood as a message 1, by using the random access resource. For example, after detecting a random access preamble based on an association between the synchronization signal block and the random access resource, the base station may obtain a downlink beam for sending a message 2.

S103: After receiving the message 1 sent by the UE, the base station estimates timing advance of the UE based on the random access preamble sequence in the message 1, and sends the message 2 to the UE. The message 2 includes configuration information such as a time-frequency resource location and a modulation and coding scheme used by the LTE to send a message 3 for conflict resolution. A random access response may be the message 2 at both a physical layer (physical layer, PHY) and a MAC layer. At the physical layer, the message 2 may be a response message corresponding to a random access preamble, for example, a random access preamble sent by LTE. At the MAC layer, the message 2 may be, for a random access opportunity or a plurality of random access opportunities, a combination of response messages for all random access preambles detected by the base station, and the combination is assembled in a form of a MAC data unit. After sending the message 1, the UE attempts to detect the message 2 within a random access response time window. Search space of a physical downlink control channel (physical downlink control channel, PDCCH) corresponding to the message 2 is search space 1 (search space 1) involved in S101. If the search space 1 is not configured in S101, the search space of the PDCCH corresponding to the message 2 is the same as the search space of the SIB1 in S100/a control resource set.

S104: After receiving the message 2, the LTE sends the message 3 on a corresponding time-frequency resource based on a configuration in the message 2.

S105: After receiving the message 3, the base station sends a message 4 to the UE, to indicate successful access of the UE.

As mentioned above, a process from the message 1 to the message 4 is referred to as a four-step (4-step) random access process. In some implementations, sending of the random access preamble in the message 1 may be further applied to a non-contention-based random access process and a two-step (2-step) random access process. The non-contention-based random access process includes the message 1 and a step of the message 1, and is used for a cell handover, a beam handover, and the like (in this case, the handover may also be performed based on a CSI-RS). The 2-step random access process includes sending of a message A and a message B. The message A includes a random access preamble and data, for example, similar to the message 1 and the message 3 in the 4-step random access process. The message B includes messages used for contention resolution and uplink scheduling, for example, similar to the message 2 and the message 4 in the 4-step random access process. If the message 1, the message 3, and the message 4 fail to be transmitted, the message 1, the message 3, and the message 4 can be retransmitted.

In some implementations, a preamble format of a large SCS is defined in Table 3a [4]. For an FR2 PRACH, only a subcarrier spacing of {60 kHz, 120 kHz} is supported. PRACH duration is a quantity of OFDM symbols occupied by a RACH occasion RO. The PRACH duration and a preamble format are configured by a *prach-ConfigurationIndex.*

**Table 3a Preamble formats for $L_{RA}$ C {139, 571, 1151} and $\Delta f^{RA}$ = 15 · $2^{\mu}$ kHz where $\mu$ C {0, 1, 2, 3}. Preamble formats for $L_{RA}$ E {139, 571, 1151} and $\Delta f^{RA}$ = 15 · $2^{\mu}$ kHz where $\mu \in$ {0, 1, 2, 3}**

| Format | $L_{RA}$ | | | $\Delta f^{RA}$ | $N_u$ | $N_{CP}^{RA}$ | $N_{dur}^{RA}$ PRACH duration |
|---|---|---|---|---|---|---|---|
| | $\mu \in$ {0, 1, 2, 3} | $\mu$ = 0 | $\mu$ = 1 | | | | |
| A1 | 139 | 1151 | 571 | 15 · $2^{\mu}$ kHz | 2 · 2048$\kappa$ · $2^{-\mu}$ | 288$\kappa$ · $2^{-\mu}$ | 2 |
| A2 | 139 | 1151 | 571 | 15 · $2^{\mu}$ kHz | 4 · 2048$\kappa$ · $2^{-\mu}$ | 576$\kappa$ · $2^{-\mu}$ | 4 |
| A3 | 139 | 1151 | 571 | 15 · $2^{\mu}$ kHz | 6 · 2048$\kappa$ · $2^{-\mu}$ | 864$\kappa$ · $2^{-\mu}$ | 6 |
| B1 | 139 | 1151 | 571 | 15 · $2^{\mu}$ kHz | 2 · 2048$\kappa$ · $2^{-\mu}$ | 216$\kappa$ · $2^{-\mu}$ | 2 |

(continued)

| Format | $L_{RA}$ | | | $\Delta f^{RA}$ | $N_u$ | $N_{CP}^{RA}$ | $N_{dur}^{RA}$ PRACH duration |
|---|---|---|---|---|---|---|---|
| | $\mu \in \{0, 1, 2, 3\}$ | $\mu = 0$ | $\mu = 1$ | | | | |
| B2 | 139 | 1151 | 571 | $15 \cdot 2^\mu$ kHz | $4 \cdot 2048\kappa \cdot 2^{-\mu}$ | $360\kappa \cdot 2^{-\mu}$ | 4 |
| B3 | 139 | 1151 | 571 | $15 \cdot 2^\mu$ kHz | $6 \cdot 2048\kappa \cdot 2^{-\mu}$ | $504\kappa \cdot 2^{-\mu}$ | 6 |
| B4 | 139 | 1151 | 571 | $15 \cdot 2^\mu$ kHz | $12 \cdot 2048\kappa \cdot 2^{-\mu}$ | $936\kappa \cdot 2^{-\mu}$ | 12 |
| C0 | 139 | 1151 | 571 | $15 \cdot 2^\mu$ kHz | $2048\kappa \cdot 2^{-\mu}$ | $1240\kappa \cdot 2^{-\mu}$ | 2 |
| C2 | 139 | 1151 | 571 | $15. 2^\mu$ kHz | $4 \cdot 2048\kappa \cdot 2^{-\mu}$ | $2048\kappa \cdot 2^{-\mu}$ | 6 |

During initial access of the UE, all downlink signals and downlink channels use a subcarrier spacing of 120 kHz. A physical random access channel with the subcarrier spacing of 120 kHz also provides a larger MIL/MCL than a physical random access channel with a subcarrier spacing greater than 120 kHz.

It can be understood that the PRACH format affects cell coverage. Therefore, a CP and guard time should be long enough to cover round-trip time and a multipath propagation delay. As shown in the following table 3b,

| Format | $\Delta f^{RA}$ | $N_u(T_c)$ | $N_{CP}^{RA}(T_c)$ | $N_{GT}^{RA}(T_c)$ | OFDM symbol duration ($T_c$) | |
|---|---|---|---|---|---|---|
| | | | | | 480 kHz | 960 kHz |
| A1 | 120 kHz | 2304 | 32768 | 17536 | 4384 | 2192 |
| A2 | 120 kHz | 4608 | 65536 | 17536 | 4384 | 2192 |
| A3 | 120 kHz | 6912 | 98304 | 17536 | 4384 | 2192 |
| B1 | 120 kHz | 1728 | 32768 | 576 | 4384 | 2192 |
| B2 | 120 kHz | 2880 | 65536 | 1728 | 4384 | 2192 |
| B3 | 120 kHz | 4032 | 98304 | 2880 | 4384 | 2192 |
| B4 | 120 kHz | 7488 | 196608 | 6336 | 4384 | 2192 |
| C0 | 120 kHz | 9920 | 16384 | 8768 | 4384 | 2192 |
| C2 | 120 kHz | 16384 | 65536 | 23296 | 4384 | 2192 |
| Remark: Because there is a blanking symbol (blanking symbol) when RACH transmission ends, for A1, A2, and A3, guard time (guard time) $N_{GT}^{RA} = (2048 + 144)\kappa \cdot 2^{-\mu} - N_u - N_{CP}^{RA}$, and for another format, the guard time $N_{GT}^{RA} = N_{dur}^{RA} \cdot (2048 + 144) \cdot \kappa \cdot 2^{-\mu} - N_u - N_{CP}^{RA}$, where $T_c$ is a time unit (time unit) of the guard time. | | | | | | |

The following further describes the method provided in this application. It should be understood that in the following described method embodiments, an example in which execution bodies are a network device and a terminal device is merely used. The network device may alternatively be replaced with a chip configured in the network device, and the terminal device may alternatively be replaced with a chip configured in the terminal device.

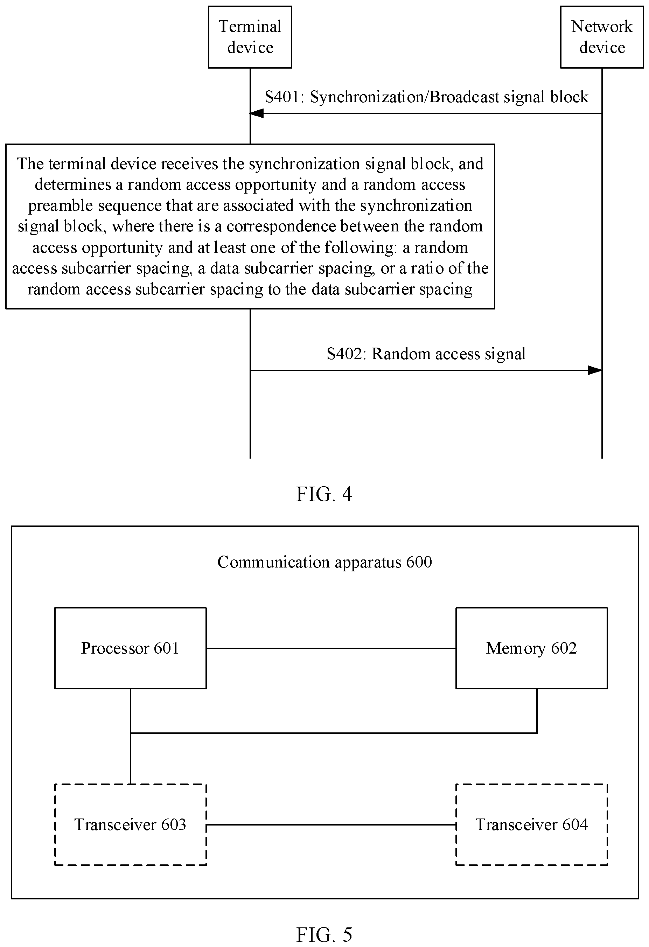

As shown in FIG. 4, this application provides a random access method. The method includes the following steps.

S401: A network device sends a synchronization signal block to a terminal device. Correspondingly, the terminal device receives the synchronization signal block, and determines a random access opportunity and a random access preamble sequence that are associated with the synchronization signal block, where the random access opportunity includes random access duration and a random access frequency.

The terminal device receives the synchronization signal block, and determines, based on a measurement result of the synchronization signal block, the random access opportunity and the random access preamble sequence that are associated with the synchronization signal block. There are a plurality of configurations of the random access opportunity and the random access preamble sequence supported by the terminal device, and the terminal device selects, from the plurality of configurations, a random access opportunity associated with the received synchronization signal block. The random access opportunity may be understood as an "RACH occasion, RO".

S402: The terminal device sends a random access signal based on the random access opportunity and the random access preamble sequence. Correspondingly, the terminal device receives the random access signal. The random access opportunity includes a random access frequency and random access duration. The random access frequency is a frequency domain resource occupied when the random access signal is sent. The random access duration is a time domain resource used when the random signal is sent, and may be understood as a quantity of OFDM symbols occupied by the random access occasion RO. The quantity of OFDM symbols may be converted to the following time unit $T_c$. There is a correspondence between the random access opportunity (for example, random access time) and at least one of the following: a random access subcarrier spacing $\Delta f^{RA}$, a data subcarrier spacing $\Delta f^{Data}$, or a ratio $\Delta f^{Data}/\Delta f^{RA}$ of the random access subcarrier spacing $\Delta f^{RA}$ to the data subcarrier spacing $\Delta f^{Data}$.

It should be understood that the subcarrier spacing in this application may correspond to an index $\mu$ corresponding to the subcarrier spacing (subcarrier spacing, SCS), as shown in Table 1. Alternatively, the subcarrier spacing SCS is a function of the index $\mu$, for example, SCS=15 $\times$ $2^\mu$ kHz. In view of this, a ratio between a subcarrier spacing SCS0 and a subcarrier spacing SCS 1 may also correspond to indexes $\mu_0$ and $\mu_0$ corresponding to the subcarrier spacings. For example, the ratio is SCS0/SCS1=$2^{\mu_0-\mu_1}$ or SCS1/SCS0=$2^{\mu_1-\mu_0}$. In addition, in this application, a sequence of two subcarrier spacings in a ratio may be exchanged, and a corresponding value is also adjusted accordingly. For example, SCS0/SCS1 may be replaced with SCS1/SCS0, and a specific value is also a reciprocal of a corresponding value. The following uses one of the SCS0/SCS1 and the SCS1/SCS0 as an example for description. The SCS0 and the SCS1 are not limited to specific subcarriers, and are merely used to describe a relationship between subcarriers.

The terminal device sends the random access signal on the random access duration and the random access frequency that are included in the random access opportunity by using the random access preamble sequence.

For example, the data subcarrier spacing may be a subcarrier spacing of an initial uplink bandwidth part (bandwidth part, BWP), a subcarrier spacing of an initial downlink BWP, or a subcarrier spacing of a BWP in a first random access opportunity.

The random access subcarrier spacing may be a subcarrier spacing of a frequency domain resource carrying the random access preamble sequence.

The ratio $\Delta f^{Data}/\Delta f^{RA}$ of the random access subcarrier spacing $\Delta f^{RA}$ to the data subcarrier spacing $\Delta f^{Data}$ is greater than or equal to R, where R is any one in a set {2, 4, 8, 16, 32}. Different values of R may correspond to different scenarios, which is described in more detail below. It may be understood that, in different implementations, the ratio $\Delta f^{Data}/\Delta f^{RA}$ of the random access subcarrier spacing $\Delta f^{RA}$ to the data subcarrier spacing $\Delta f^{Data}$ may be alternatively replaced with a ratio $\Delta f^{RA}/\Delta f^{Data}$ of the data subcarrier spacing $\Delta f^{RA}$ to the random access subcarrier spacing $\Delta f^{RA}$. In this case, a value range of R is adjusted accordingly. It may be understood that the two ratios are substantially equivalent.

As described above, the CP and guard time may be designed to cover the round-trip time and a length of the multipath propagation delay. However, in some implementations, if time required for cell coverage is short, some designs of a small CP, guard time or another parameter may be considered, to avoid wasting time resources. For example, the following provides some designs for a scenario in which time required for cell coverage is short.

Refer to Table 4. A value of the random access duration when R is 1, 2, 4, or 8 is described as an example. In other words, the ratio $\Delta f^{Data}/\Delta f^{RA}$ is greater than or equal to 1, 2, 4, or 8. In an implementation in which Table 4 is used, a unit of the random access duration $N_{dur}^{RA}$ is an orthogonal frequency division multiplexing OFDM symbol corresponding to the random access subcarrier spacing $\Delta f^{RA}$. The unit is the OFDM symbol, and may also be understood as that duration occupied by one OFDM symbol is used as a unit.

**Table 4**

| $\Delta f^{Data}/\Delta f^{RA}$ | 1 | 2 | 4 | 8 |
|---|---|---|---|---|
| Random access duration $N_{dur}^{RA}$ | 6 | 6 | 5.25, 5.5, or 5.75 | 5.5, 5.625, or 5.75 |

The ratio $\Delta f^{Data}/\Delta f^{RA}$ of the random access subcarrier spacing to the data subcarrier spacing is greater than or equal to 2, and the random access duration may occupy six OFDM symbols. The ratio $\Delta f^{Data}/\Delta f^{RA}$ of the random access subcarrier spacing to the data subcarrier spacing is greater than or equal to 4, and the random access duration may be 5.25, 5.5, or 5.75 OFDM symbols. The ratio $\Delta f^{Data}/\Delta f^{RA}$ of the random access subcarrier spacing to the data subcarrier spacing is greater than or equal to 8, and the random access duration may be 5.5, 5.625, or 5.75 OFDM symbols.

Values in the related table are obtained by subtracting k/8 or k/4 from values in last three columns in the following calculation table. In a PRACH SCS subcarrier spacing, k/8 or k/4 OFDM symbols (on a time scale corresponding to

PRACH SCS $\Delta f^{RA}$) corresponds to $\dfrac{k}{8} \times \Delta f^{Data}/\Delta f^{RA}$ or $\dfrac{k}{4} \times \Delta f^{Data}/\Delta f^{RA}$ data OFDM symbols (on a time scale corresponding to DATA SCS $\Delta f^{Data}$).

Table 5

| Preamble format | Duration of each part of a PRACH when a random access subcarrier spacing $\Delta f^{RA}$ = 120 kHz (unit: $8T_c$) | | | | A quantity of data OFDM symbols occupied by GT when a random access subcarrier spacing $\Delta f^{RA}$ = 120 kHz and a data subcarrier spacing is larger (unit: $2192 \cdot 2^{3-\mu} \cdot T_c$) | | |
|---|---|---|---|---|---|---|---|
| | $N_{\text{dur}}^{RA}$ | $N_{CP}^{RA}$ | $N_u$ | GT | 240 kHz | 480 kHz | 960 kHz |
| A1 | 2 | 288 | 4096 | 2192 | 2 | 4 | 8 |
| A2 | 4 | 576 | 8192 | 2192 | 2 | 4 | 8 |
| A3 | 6 | 864 | 12288 | 2192 | 2 | 4 | 8 |
| B1 | 2 | 216 | 4096 | 72 | 0.065693 | 0.131387 | 0.262774 |
| B2 | 4 | 360 | 8192 | 216 | 0.19708 | 0.394161 | 0.788321 |
| B3 | 6 | 504 | 12288 | 360 | 0.328467 | 0.656934 | 1.313869 |
| B4 | 12 | 936 | 24576 | 792 | 0.722628 | 1.445255 | 2.890511 |
| C0 | 2 | 1240 | 2048 | 1096 | 1 | 2 | 4 |
| C2 | 6 | 2048 | 8192 | 2912 | 2.656934 | 5.313869 | 10.62774 |

It can be learned from the table that, if an existing random access preamble format is used, and the random access subcarrier spacing is smaller than the data subcarrier spacing (for example, the data subcarrier spacing is 4 times, 8 times, or even larger than the random access subcarrier spacing), field designs of some preamble formats or even all preamble formats are too long. For example, a cyclic prefix $N_{CP}^{RA}$. For another example, random access preamble duration $N_u$. For still another example, guard time GT (or random access duration $N_{\text{dur}}^{RA}$). Therefore, in the following embodiment, a plurality of methods for adjusting a length of each field in a random access preamble format are designed, to reduce the random access duration $N_{\text{dur}}^{RA}$ or the guard time GT. This ensures random access preamble detection performance and enables the random access duration $N_{\text{dur}}^{RA}$ or the guard time GT to be within a proper time range, to maximize use of resources.

If last three columns are converted into the PRACH subcarrier spacing, the last three columns may be (last two columns).

Table 6

| Preamble format | Duration of each part of a PRACH when a random access subcarrier spacing $\Delta f^{RA}$ = 120 kHz (unit: $8T_c$) | | | | Duration of a PRACH CP (unit: a quantity of OFDM symbols corresponding to a PRACH SCS) | Duration of PRACH GT (unit: a quantity of OFDM symbols corresponding to a PRACH SCS) |
|---|---|---|---|---|---|---|
| | $N_{\text{dur}}^{RA}$ | $N_{CP}^{RA}$ | $N_u$ | GT | | |
| A1 | 2 | 288 | 4096 | 2192 | 0.131387 | 1 |

(continued)

| Preamble format | Duration of each part of a PRACH when a random access subcarrier spacing $\Delta f^{RA}$ = 120 kHz (unit: $8T_c$) | | | | Duration of a PRACH CP (unit: a quantity of OFDM symbols corresponding to a PRACH SCS) | Duration of PRACH GT (unit: a quantity of OFDM symbols corresponding to a PRACH SCS) |
|---|---|---|---|---|---|---|
| | $N_{dur}^{RA}$ | $N_{CP}^{RA}$ | $N_u$ | GT | | |
| A2 | 4 | 576 | 8192 | 2192 | 0.262774 | 1 |
| A3 | 6 | 864 | 12288 | 2192 | 0.394161 | 1 |
| B1 | 2 | 216 | 4096 | 72 | 0.09854 | 0.032847 |
| B2 | 4 | 360 | 8192 | 216 | 0.164234 | 0.09854 |
| B3 | 6 | 504 | 12288 | 360 | 0.229927 | 0.164234 |
| B4 | 12 | 936 | 24576 | 792 | 0.427007 | 0.361314 |
| C0 | 2 | 1240 | 2048 | 1096 | 0.565693 | 0.5 |
| C2 | 6 | 2048 | 8192 | 2912 | 0.934307 | 1.328467 |

Corresponding to different random access preamble formats, a design of the random access duration $N_{dur}^{RA}$ is further described in the following.

Corresponding to the random access preamble format C2, that a unit of the random access duration $N_{dur}^{RA}$ is an OFDM symbol corresponding to the random access subcarrier spacing $\Delta f^{RA}$ is used as an example. Table 7 describes an example of values of the random access duration $N_{dur}^{RA}$ when R is 1, 2, 4, or 8.

**Table 7**

| $\Delta f^{Data}/\Delta f^{RA}$ | 1 | 2 | 4 | 8 |
|---|---|---|---|---|
| Random access duration $N_{dur}^{RA}$ corresponding to C2 | 6 | 6 | 5.25, 5.5, or 5.75 | 5.5, 5.625, or 5.75 |

In other words, corresponding to the random access preamble format C2, when $\Delta f^{Data}/\Delta f^{RA}$ is greater than or equal to 2, the random access duration $N_{dur}^{RA}$ is six OFDM symbols. When $\Delta f^{Data}/\Delta f^{RA}$ is greater than or equal to 4, the random access duration $N_{dur}^{RA}$ may be 5.25, 5.5, or 5.75 symbols. When $\Delta f^{Data}/\Delta f^{RA}$ is greater than or equal to 8, the random access duration $N_{dur}^{RA}$ may be 5.5, 5.625, or 5.75 symbols.

The foregoing values can reduce the guard time of a random access preamble and do not affect random access preamble performance (to be specific, both the guard time and a CP length can meet a requirement of cell coverage). In addition, the random access time can be aligned with data time in terms of a data OFDM symbol time granularity, and a random access channel minimizes interference to a subcarrier spacing of a data signal, so that solutions in this application can achieve performance benefits.

Corresponding to the random access preamble format C2, that a unit of the random access duration $N_{dur}^{RA}$ is an OFDM symbol corresponding to the data subcarrier spacing $\Delta f^{Data}$ is used as an example. Table 8 describes an example of values of the random access duration $N_{dur}^{RA}$ when R is 1, 2, 4, or 8.

**Table 8**

| $\Delta f^{Data}/\Delta f^{RA}$ | 1 | 2 | 4 | 8 |
|---|---|---|---|---|

(continued)

| | | | | |
|---|---|---|---|---|
| Random access duration $N_{dur}^{RA}$ corresponding to C2 | 6 | 12 | 21, 22, or 23 | 44, 45, or 46 |

In other words, corresponding to the random access preamble format C2, when $\Delta f^{Data}/\Delta f^{RA}$ is greater than or equal to 2, the random access duration $N_{dur}^{RA}$ may be 12 symbols. When $\Delta f^{Data}/\Delta f^{RA}$ is greater than or equal to 4, the random access duration $N_{dur}^{RA}$ may be 21, 22, or 23 symbols. When $\Delta f^{Data}/\Delta f^{RA}$ is greater than or equal to 8, the random access duration $N_{dur}^{RA}$ may be 44, 45, or 46 symbols.

In some implementations, guard time (guard time, GT) is further included after a random access preamble is sent and before an uplink or downlink OFDM symbol is sent. The ratio $\Delta f^{Data}/\Delta f^{RA}$ of the random access subcarrier spacing $\Delta f^{RA}$ to the data subcarrier spacing $\Delta f^{Data}$ is greater than or equal to R. Refer to the following Table 9. Table 9 describes an example of values of the random access duration when R is 1, 2, 4, or 8, in other words, the ratio $\Delta f^{Data}/\Delta f^{RA}$ is greater than or equal to 1, 2, 4, or 8. In the implementation in which Table 9 is used, a unit of the guard time GT is an orthogonal frequency division multiplexing OFDM symbol corresponding to the random access subcarrier spacing $\Delta f^{RA}$.

**Table 9**

| $\Delta f^{Data}/\Delta f^{RA}$ | 1 | 2 | 4 | 8 |
|---|---|---|---|---|
| Guard time GT | 1 | 0.5 | 0.25 or 0.5 | 0.125, 0.25, 0.375, or 0.5 |

That is, if $\Delta f^{Data}/\Delta f^{RA}$ is greater than or equal to 1, the guard time GT may be one OFDM symbol. If $\Delta f^{Data}/\Delta f^{RA}$ is greater than or equal to 2, the guard time GT may be 0.5 OFDM symbols. If $\Delta f^{Data}/\Delta f^{RA}$ is greater than or equal to 4, the guard time GT may be 0.25 or 0.5 symbols. If $\Delta f^{Data}/\Delta f^{RA}$ is greater than or equal to 8, the guard time GT may be 0.125, 0.25, 0.375, or 0.5 symbols.

Corresponding to random access preamble formats A1 to A3, that a unit of the guard time GT is an OFDM symbol corresponding to the random access subcarrier spacing $\Delta f^{RA}$ is used as an example. Table 10 describes an example of values of the guard time GT when R is 1, 2, 4, or 8.

**Table 10**

| $\Delta f^{Data}/\Delta f^{RA}$ | 1 | 2 | 4 | 8 |
|---|---|---|---|---|
| A1 | 1 | 0.5 | 0.25 or 0.5 | 0.125, 0.25, 0.375, or 0.5 |
| A2 | 1 | 0.5 | 0.25 or 0.5 | 0.125, 0.25, 0.375, or 0.5 |
| A3 | 1 | 0.5 | 0.25 or 0.5 | 0.125, 0.25, 0.375, or 0.5 |

Corresponding to the random access preamble format A1 is used as an example. If $\Delta f^{Data}/\Delta f^{RA}$ is greater than or equal to 2, the guard time GT may be 0.5 symbols. If $\Delta f^{Data}/\Delta f^{RA}$ is greater than or equal to 4, the guard time GT may be 0.25 or 0.5 symbols. If $\Delta f^{Data}/\Delta f^{RA}$ is greater than or equal to 8, the guard time GT may be 0.125, 0.25, 0.375, or 0.5 symbols. Similarly, the guard time GT of the random access preamble formats A2 and A3 may also be determined with reference to Table 5.

Corresponding to the random access preamble formats A1 to A3, that a unit of the guard time GT is an OFDM symbol corresponding to the data subcarrier spacing $\Delta f^{Data}$ is used as an example. Table 11 describes an example of values of the guard time GT when R is 1, 2, 4, or 8.

**Table 11**

| $\Delta f^{Data}/\Delta f^{RA}$ | 1 | 2 | 4 | 8 |
|---|---|---|---|---|
| A1 | 1 | 0.5 | 0.25 or 0.5 | 0.125, 0.25, 0.375, or 0.5 |
| A2 | 1 | 0.5 | 0.25 or 0.5 | 0.125, 0.25, 0.375, or 0.5 |
| A3 | 1 | 0.5 | 0.25 or 0.5 | 0.125, 0.25, 0.375, or 0.5 |

Corresponding to the random access preamble format A1 is used as an example. If $\Delta f^{Data}/\Delta f^{RA}$ is greater than or equal to 2, the guard time GT may be 0.5 symbols. If $\Delta f^{Data}/\Delta f^{RA}$ is greater than or equal to 4, the guard time GT may be 0.25 or 0.5 symbols. If $\Delta f^{Data}/\Delta f^{RA}$ is greater than or equal to 8, the guard time GT may be 0.125, 0.25, 0.375, or 0.5 symbols. Similarly, the guard time GT of the random access preamble formats A2 and A3 may also be determined with reference to Table 11.

Corresponding to the random access preamble format C2, that a unit of the random access duration $N_{dur}^{RA}$ is an OFDM symbol corresponding to the random access subcarrier spacing $\Delta f^{RA}$ is used as an example. Table 12 describes an example of values of the random access duration $N_{dur}^{RA}$ when the random access subcarrier spacing $\Delta f^{RA}$ is 120 kHz, and when the data subcarrier spacing $\Delta f^{Data}$ is 120, 240, 480, or 960 kHz.

**Table 12**

| $\Delta f^{Data}$ (kHz) | 120 | 240 | 480 | 960 |
|---|---|---|---|---|
| C2 | 6 | 6 | 5.25, 5.5, or 5.75 | 5.5, 5.625, or 5.75 |

In other words, the random access subcarrier spacing $\Delta f^{RA}$ is equal to 120 kHz. If the data subcarrier spacing $\Delta f^{Data}$ is 120 kHz, the random access duration $N_{dur}^{RA}$ may be six symbols. If the data subcarrier spacing $\Delta f^{Data}$ is 240 kHz, the random access duration $N_{dur}^{RA}$ may be six symbols. If the data subcarrier spacing $\Delta f^{Data}$ is 480 kHz, the random access duration $N_{dur}^{RA}$ may be 5.25, 5.5, or 5.75 symbols. If the data subcarrier spacing $\Delta f^{Data}$ is 960 kHz, the random access duration $N_{dur}^{RA}$ may be 5.5, 5.625, or 5.75 symbols.

Corresponding to the random access preamble format C2, that a unit of the random access duration $N_{dur}^{RA}$ is an OFDM symbol corresponding to the data subcarrier spacing $\Delta f^{Data}$ is used as an example. Table 13 describes an example of values of the random access duration $N_{dur}^{RA}$ when the random access subcarrier spacing $\Delta f^{RA}$ is 120 kHz, and when the data subcarrier spacing $\Delta f^{Data}$ is 120, 240, 480, or 960 kHz.

**Table 13**

| $\Delta f^{Data}$ (kHz) | 120 | 240 | 480 | 960 |
|---|---|---|---|---|
| C2 | 6 | 12 | 21, 22, or 23 | 44, 45, or 46 |

In other words, a configuration of Table 13 is used, and the corresponding random access subcarrier spacing $\Delta f^{RA}$ is equal to 120 kHz. If the data subcarrier spacing $\Delta f^{Data}$ is 120 kHz, the random access duration $N_{dur}^{RA}$ may be six symbols. If the data subcarrier spacing $\Delta f^{Data}$ is 240 kHz, the random access duration $N_{dur}^{RA}$ may be twelve symbols. If the data subcarrier spacing $\Delta f^{Data}$ is 480 kHz, the random access duration $N_{dur}^{RA}$ may be 21, 22, or 23 symbols. If the data subcarrier spacing $\Delta f^{Data}$ is 960 kHz, the random access duration $N_{dur}^{RA}$ may be 44, 45, or 46 symbols.

Corresponding to the random access preambles A1 to A3, that a unit of the random access duration $N_{dur}^{RA}$ is an OFDM symbol corresponding to the random access subcarrier spacing $\Delta f^{RA}$ is used as an example. Table 14 describes an example of values of the guide time GT when the random access subcarrier spacing $\Delta f^{RA}$ is 120 kHz, and when the data subcarrier spacing $\Delta f^{Data}$ is 120, 240, 480, or 960 kHz.

**Table 14**

| $\Delta f^{Data}$ (kHz) | 120 | 240 | 480 | 960 |
|---|---|---|---|---|
| A1 | 1 | 0.5 | 0.25 or 0.5 | 0.125, 0.25, 0.375, or 0.5 |
| A2 | 1 | 0.5 | 0.25 or 0.5 | 0.125, 0.25, 0.375, or 0.5 |
| A3 | 1 | 0.5 | 0.25 or 0.5 | 0.125, 0.25, 0.375, or 0.5 |

Corresponding to the random access preamble format A1 is used as an example, and the corresponding random access subcarrier spacing $\Delta f^{RA}$ is equal to 120 kHz. If the data subcarrier spacing $\Delta f^{Data}$ is 120 kHz, the guard time GT may be one OFDM symbol corresponding to the random access subcarrier spacing $\Delta f^{RA}$. If the data subcarrier spacing $\Delta f^{Data}$ is 240 kHz, the guard time GT may be 0.5 OFDM symbols corresponding to the random access subcarrier spacing $\Delta f^{RA}$. If the data subcarrier spacing $\Delta f^{Data}$ is 480 kHz, the guard time GT may be 0.25 or 0.5 OFDM symbols corresponding to the random access subcarrier spacing $\Delta f^{RA}$. If the data subcarrier spacing $\Delta f^{Data}$ is 960 kHz, the guard time GT may be 0.125, 0.25, 0.375, or 0.5 OFDM symbols corresponding to the random access subcarrier spacing $\Delta f^{RA}$. Similarly, the corresponding random access subcarrier spacing $\Delta f^{RA}$ is equal to 120 kHz. The Guard time GT of the random access preamble formats A2 and A3 in a case of different data subcarrier spacings $\Delta f^{Data}$ may also be determined with reference to Table 14.

Corresponding to the random access preamble formats A1 to A3, that a unit of the guard time GT is an OFDM symbol corresponding to the data subcarrier spacing $\Delta f^{Data}$. Table 15 describes an example of values of the guide time GT when the random access subcarrier spacing $\Delta f^{RA}$ is 120 kHz, and when the data subcarrier spacing $\Delta f^{Data}$ is 120, 240, 480, or 960 kHz.

**Table 15**

| $\Delta f^{Data}$ (kHz) | 120 | 240 | 480 | 960 |
|---|---|---|---|---|
| A1 | 1 | 0.5 | 0.25 or 0.5 | 0.125, 0.25, 0.375, or 0.5 |
| A2 | 1 | 0.5 | 0.25 or 0.5 | 0.125, 0.25, 0.375, or 0.5 |
| A3 | 1 | 0.5 | 0.25 or 0.5 | 0.125, 0.25, 0.375, or 0.5 |

Corresponding to the random access preamble format A1 is used as an example, and the corresponding random access subcarrier spacing $\Delta f^{RA}$ is equal to 120 kHz. If the data subcarrier spacing $\Delta f^{Data}$ is 120 kHz, the guard time GT may be one OFDM symbol corresponding to the data subcarrier spacing $\Delta f^{RA}$. If the data subcarrier spacing $\Delta f^{Data}$ is 240 kHz, the guard time GT may be 0.5 OFDM symbols corresponding to the data subcarrier spacing $\Delta f^{RA}$. If the data subcarrier spacing $\Delta f^{Data}$ is 480 kHz, the guard time GT may be 0.25 or 0.5 OFDM symbols corresponding to the data subcarrier spacing $\Delta f^{RA}$. If the data subcarrier spacing $\Delta f^{Data}$ is 960 kHz, the guard time GT may be 0.125, 0.25, 0.375, or 0.5 OFDM symbols corresponding to the data subcarrier spacing $\Delta f^{RA}$. Similarly, the corresponding random access subcarrier spacing $\Delta f^{RA}$ is equal to 120 kHz. The Guard time GT of the random access preamble formats A2 and A3 in a case of different data subcarrier spacings $\Delta f^{Data}$ may also be determined with reference to Table 15.

In an existing 5G protocol, a slot in a random access opportunity and an OFDM symbol location in the slot are based on a random access subcarrier, and random access time is usually in a second half of the slot. In this case, a location of the random access opportunity in a random access slot is always an integer quantity of OFDM symbols. For example, [38.211, Table 6.3.3.2-2, Table 6.3.3.2-3, and Table 6.3.3.2-4].

**Table 6.3.3.2-4: Random access configurations for an FR2 and an unpaired spectrum. Random access configurations for an FR2 and an unpaired spectrum.**

| PRACH Config. Index | Preamble format Preamble format | Slot number Slot number | Starting symbol Starting symbol | $N_{t}^{RA,slot}$, number of time-domain PRACH occasions within a PRACH slot Quantity of time-domain random access opportunities within a random access slot | $N_{dur}^{RA}$ PRACH duration Random access duration |
|---|---|---|---|---|---|
| 0 | A1 | 4, 9, 14, 19, 24, 29, 34, 39 | 0 | 6 | 2 |

(continued)

| PRACH Config. Index | Preamble format Preamble format | Slot number Slot number | Starting symbol Starting symbol | $N_{\text{t}}^{\text{RA,slot}}$ , number of time-domain PRACH occasions within a PRACH slot Quantity of time-domain random access opportunities within a random access slot | $N_{\text{dur}}^{\text{RA}}$ PRACH duration Random access duration |
|---|---|---|---|---|---|
| 1 | A1 | 3, 7, 11, 15, 19, 23, 27, 31, 35, 39 | 0 | 6 | 2 |
| 2 | A1 | 9, 19, 29, 39 | 0 | 6 | 2 |
| 3 | A1 | 4, 9, 14, 19, 24, 29, 34, 39 | 0 | 6 | 2 |
| 4 | A1 | 3, 7, 11, 15, 19, 23, 27, 31, 35, 39 | 0 | 6 | 2 |
| 5 | A1 | 4, 9, 14, 19, 24, 29, 34, 39 | 0 | 6 | 2 |
| 6 | A1 | 4, 9, 14, 19, 24, 29, 34, 39 | 0 | 6 | 2 |
| 7 | A1 | 3, 7, 11, 15, 19, 23, 27, 31, 35, 39 | 0 | 6 | 2 |
| 8 | A1 | 7, 15, 23, 31, 39 | 0 | 6 | 2 |
| 9 | A1 | 4, 9, 14, 19, 24, 29, 34, 39 | 0 | 6 | 2 |
| ... | ... | ... | ... | ... | ... |

Based on the foregoing description, when a difference between the random access subcarrier spacing and the data subcarrier spacing is large, some fields defined in a current random access preamble format are too long, causing resource waste. If the location of the random access opportunity in the slot is still a location of the integer quantity of OFDM symbols, the random access opportunity splits one slot. This is unfavorable for alignment. Therefore, the following embodiments provide some methods in which a starting OFDM symbol location (that is, the starting symbol of a field in the foregoing table) of a random access opportunity is a non-integral quantity of OFDM symbols, so that it is easier to efficiently multiplex random access and data in terms of time.

In some implementations, if an OFDM symbol corresponding to the random access subcarrier spacing is used as a unit of random access opportunity time, a starting location of the random access opportunity in one slot may be located in a middle of one OFDM symbol. This may be understood as that the starting location of the random access opportunity in one slot may not be aligned with a starting boundary of the OFDM symbol. In other words, a starting OFDM symbol location of random access in one slot may not be an integer.

For example, if the ratio $\Delta f^{Data}/\Delta f^{RA}$ of the random access subcarrier spacing $\Delta f^{RA}$ to the data subcarrier spacing $\Delta f^{Data}$ is 2, a starting OFDM symbol that is of the random access opportunity corresponding to the random access format A1 and that is in one slot is $S_{A1,\,2}^{\text{RA}}$ , a starting OFDM symbol that is of the random access opportunity corresponding to the random access format A2 and that is in one slot is $S_{A2,\,2}^{\text{RA}}$ , a starting OFDM symbol that is of the random access opportunity corresponding to the random access format A3 and that is in one slot is $s_{A3, 2}^{RA}$, and a starting OFDM symbol that is of the random access opportunity corresponding to the random access format A3 and that is in one slot is $s_{C2, 2}^{RA}$. $s_{A1, 2}^{RA}$, $s_{A2, 2}^{RA}$, $s_{A3, 2}^{RA}$, and $s_{C2, 2}^{RA}=n2+0.5$, where n2 is a positive integer greater than or equal to 0 and less than 12.

For another example, if the ratio $\Delta f^{Data}/\Delta f^{RA}$ of the random access subcarrier spacing $\Delta f^{RA}$ to the data subcarrier spacing $\Delta f^{Data}$ is 4, a starting OFDM symbol that is of the random access opportunity corresponding to the random access format A1 and that is in one slot is $s_{A1, 4}^{RA}$, a starting OFDM symbol that is of the random access opportunity corresponding to the random access format A2 and that is in one slot is $s_{A2, 4}^{RA}$, a starting OFDM symbol that is of the random access opportunity corresponding to the random access format A3 and that is in one slot is $s_{A3, 4}^{RA}$, and a starting OFDM symbol that is of the random access opportunity corresponding to the random access format A3 and that is in one slot is $s_{C2, 4}^{RA}$. $s_{A1, 4}^{RA}$, $s_{A2, 4}^{RA}$, $s_{A3, 4}^{RA}$, or $s_{C2, 4}^{RA}=n4+0.25$, n4+0.5, or n4+0.75, where n4 is a positive integer greater than or equal to 0 and less than 12.

For still another example, if the ratio $\Delta f^{Data}/\Delta f^{RA}$ of the data subcarrier spacing $\Delta f^{Data}$ to the random access subcarrier spacing $\Delta f^{RA}$ is 8, a starting OFDM symbol that is of the random access opportunity corresponding to the random access format A1 and that is in one slot is $s_{A1, 8}^{RA}$, a starting OFDM symbol that is of the random access opportunity corresponding to the random access format A2 and that is in one slot is $s_{A2, 8}^{RA}$, a starting OFDM symbol that is of the random access opportunity corresponding to the random access format A3 and that is in one slot is $s_{A3, 8}^{RA}$, and a starting OFDM symbol that is of the random access opportunity corresponding to the random access format A3 and that is in one slot is $s_{C2, 8}^{RA}$. $s_{A1, 8}^{RA}$, $s_{A2, 8}^{RA}$, $s_{A3, 8}^{RA}$, or $s_{C2, 8}^{RA}=n8+0.5$, n8+0.625, or n8+0.75, where n8 is a positive integer greater than or equal to 0 and less than 12.

It can be learned that, setting starting OFDM symbols that are non-integral quantity of symbols can implement a more flexible starting configuration of the random access opportunity. This improves communication performance.

In some other implementations, if an OFDM symbol corresponding to the data subcarrier spacing is used as a unit of the random access opportunity time, a starting OFDM symbol location of the random access opportunity in one slot may be greater than or equal to 14. For example, a slot corresponding to the random access subcarrier spacing and OFDM symbol time. For example, if the random access subcarrier spacing is equal to 120 kHz, and the data subcarrier spacing is equal to 480 kHz, one random access slot corresponds to four data slots. If a corresponding random access slot is $l_0$, and an index of an OFDM symbol is [0, 1, ..., 13], a data slot corresponding to the corresponding random access slot is [$4l_0$, $4l_0$ + 1, $4l_0$ + 2, $4l_0$ + 3], and the index of the OFDM symbol is [0, 1, ..., 41].

For example, if the ratio $\Delta f^{Data}/\Delta f^{RA}$ of the data subcarrier spacing $\Delta f^{Data}$ to the random access subcarrier spacing $\Delta f^{RA}$ is 2, a starting OFDM symbol that is of the random access opportunity corresponding to the random access format A1 and that is in one slot is $s_{A1, 2}^{RA}$, a starting OFDM symbol that is of the random access opportunity corresponding to the random access format A2 and that is in one slot is $s_{A2, 2}^{RA}$, a starting OFDM symbol that is of the random access opportunity corresponding to the random access format A3 and that is in one slot is $s_{A3, 2}^{RA}$, and a starting OFDM symbol that is of the random access opportunity corresponding to the random access format A3 and that is in one slot is $s_{C2, 2}^{RA}$. $s_{A1, 2}^{RA}$, $s_{A2, 2}^{RA}$, $s_{A3, 2}^{RA}$, and $s_{C2, 2}^{RA}=n2$, where n2 is an integer greater than 14 and less than or equal to 28.

For another example, if the ratio $\Delta f^{Data}/\Delta f^{RA}$ of the random access subcarrier spacing $\Delta f^{RA}$ to the data subcarrier spacing $\Delta f^{Data}$ is 4, a starting OFDM symbol that is of the random access opportunity corresponding to the random access format A1 and that is in one slot is $s_{A1,\,4}^{\mathrm{RA}}$, a starting OFDM symbol that is of the random access opportunity corresponding to the random access format A2 and that is in one slot is $s_{A2,\,4}^{\mathrm{RA}}$, a starting OFDM symbol that is of the random access opportunity corresponding to the random access format A3 and that is in one slot is $s_{A3,\,4}^{\mathrm{RA}}$, and a starting OFDM symbol that is of the random access opportunity corresponding to the random access format A3 and that is in one slot is $s_{C2,\,4}^{\mathrm{RA}}$. $s_{A1,\,4}^{\mathrm{RA}}$, $s_{A2,\,4}^{\mathrm{RA}}$, $s_{A3,\,4}^{\mathrm{RA}}$, or $s_{C2,\,4}^{\mathrm{RA}} = \mathrm{n4}$, where n4 is an integer greater than 14 and less than or equal to 48.

For still another example, if the ratio $\Delta f^{Data}/\Delta f^{RA}$ of the data subcarrier spacing $\Delta f^{Data}$ to the random access subcarrier spacing $\Delta f^{RA}$ is 8, a starting OFDM symbol that is of the random access opportunity corresponding to the random access format A1 and that is in one slot is $s_{A1,\,8}^{\mathrm{RA}}$, a starting OFDM symbol that is of the random access opportunity corresponding to the random access format A2 and that is in one slot is $s_{A2,\,8}^{\mathrm{RA}}$, a starting OFDM symbol that is of the random access opportunity corresponding to the random access format A3 and that is in one slot is $s_{A3,\,8}^{\mathrm{RA}}$, and a starting OFDM symbol that is of the random access opportunity corresponding to the random access format A3 and that is in one slot is $s_{C2,\,8}^{\mathrm{RA}}$. $s_{A1,\,8}^{\mathrm{RA}}$, $s_{A2,\,8}^{\mathrm{RA}}$, $s_{A3,\,8}^{\mathrm{RA}}$, or $s_{C2,\,8}^{\mathrm{RA}} = \mathrm{n8}$, where n8 is an integer greater than 14 and less than or equal to 112.

In another aspect, the random access subcarrier spacing increases. For example, a value of the random access subcarrier spacing is 480 kHz, 960 kHz, or even higher, which is not limited herein. In this case, random access detection performance deteriorates, that is, random access preamble duration (or random access preamble duration) $N_u$ decreases as the random access subcarrier spacing increases. As a result, a detection effect is reduced.

In a possible implementation, a first factor $\mu_0$ is introduced into a process of determining the random access preamble duration $N_u$. Alternatively, the random access preamble duration $N_u$ is determined based on at least the first factor $\mu_0$, where the first factor $\mu_0$ is an integer. For example, the first factor $\mu_0 = 2$, 4, or 8. The following Table 16 provides an example of the random access preamble duration $N_u$ in different formats:

**Table 16**

| Format | $L_{\mathrm{RA}}$ | | | $\Delta f^{RA}$ | $N_u$ | $N_{\mathrm{CP}}^{\mathrm{RA}}$ |
|---|---|---|---|---|---|---|
| A1 | 139 | 1151 | 571 | $15 \cdot 2^{\mu}$ kHz | $2 \cdot \mu_0 \cdot 2048\kappa \cdot 2^{-\mu}$ | $288K \cdot 2^{-\mu}$ |
| A2 | 139 | 1151 | 571 | $15 \cdot 2^{\mu}$ kHz | $4 \cdot \mu_0 \cdot 2048\kappa \cdot 2^{-\mu}$ | $576\kappa \cdot 2^{-\mu}$ |
| A3 | 139 | 1151 | 571 | $15 \cdot 2^{\mu}$ kHz | $6 \cdot \mu_0 \cdot 2048\kappa \cdot 2^{-\mu}$ | $864\kappa \cdot 2^{-\mu}$ |
| B1 | 139 | 1151 | 571 | $15 \cdot 2^{\mu}$ kHz | $2 \cdot \mu_0 \cdot 2048\kappa \cdot 2^{-\mu}$ | $216\kappa \cdot 2^{-\mu}$ |
| B2 | 139 | 1151 | 571 | $15 \cdot 2^{\mu}$ kHz | $4 \cdot \mu_0 \cdot 2048\kappa \cdot 2^{-\mu}$ | $360\kappa \cdot 2^{-\mu}$ |
| B3 | 139 | 1151 | 571 | $15 \cdot 2^{\mu}$ kHz | $6 \cdot \mu_0 \cdot 2048\kappa \cdot 2^{-\mu}$ | $504\kappa \cdot 2^{-\mu}$ |
| B4 | 139 | 1151 | 571 | $15 \cdot 2^{\mu}$ kHz | $12 \cdot \mu_0 \cdot 2048\kappa \cdot 2^{-\mu}$ | $936\kappa \cdot 2^{-\mu}$ |
| C0 | 139 | 1151 | 571 | $15 \cdot 2^{\mu}$ kHz | $\mu_0 \cdot 2048K \cdot 2^{-\mu}$ | $1240\kappa \cdot 2^{-\mu}$ |
| C2 | 139 | 1151 | 571 | $15 \cdot 2^{\mu}$ kHz | $4 \cdot \mu_0 \cdot 2048\kappa \cdot 2^{-\mu}$ | $2048\kappa \cdot 2^{-\mu}$ |

It should be understood that the preamble formats A1, A2, A3, B1, B2, B3, B4, C0, and C2 may also use other names, that is, may further correspond to other preamble formats that are not limited to the preamble formats. For example, D1, D2, D3, E1, E2, E3, E4, F0, and F2. This is not limited herein.

It should be understood that cyclic prefix lengths $N_{\mathrm{CP}}^{\mathrm{RA}}$ corresponding to the preamble formats may change, but a change range does not exceed 1024 $\kappa \cdot 2^{-\mu}$. A second factor $\mu$ is an index corresponding to the random access subcarrier spacing, and a value of the second factor $\mu$ may be any one in a set {0 to 9}.

It should be understood that, on a premise of no conflict, in this case, the random access opportunity duration $N_{dur}^{RA}$ corresponding to each random access preamble format may be further determined in combination with any other manner in this application.

In the example in Table 16, $k$=64, and a time unit of the random access sequence time $N_u$ and the cyclic prefix length $N_{CP}^{RA}$ is $T_c = 1/(\Delta f_{max} \cdot N_f)$, where $\Delta f_{max} = 480 \cdot 10^3$ Hz, and $N_f = 4096$. Alternatively, $k$=128, and the time unit is $T_c = 1/(\Delta f_{max} \cdot N_f)$, where $\Delta f_{max} = 960 \cdot 10^3$ Hz, and $N_f = 4096$. Alternatively, $\kappa = 256$, the corresponding time unit is $T_c = 1/(\Delta f_{max} - N_f)$, where $\Delta f_{max} = 1920 \cdot 10^3$ Hz, and $N_f = 4096$.

In another possible implementation, a first factor $\mu_0$ is introduced into a process of determining the cyclic prefix time $N_{CP}^{RA}$. Alternatively, the cyclic prefix time $N_{CP}^{RA}$ may be determined based on at least the first factor $\mu_0$, for example, may also be determined in combination with a second factor $\mu$ and a constant $\kappa$, where the first factor $\mu_0$ is an integer. For example, the first factor $\mu_0$=2, 4, or 8. The following Table 17 provides an example of the cyclic prefix time $N_{CP}^{RA}$ in different formats:

**Table 17**

| Format | $L_{RA}$ | | | $\Delta f^{RA}$ | $N_u$ | $N_{CP}^{RA}$ |
|---|---|---|---|---|---|---|
| A1 | 139 | 1151 | 571 | $15 \cdot 2^\mu$ kHz | $2 \cdot 2048\kappa \cdot 2^{-\mu}$ | $\mu_0 \cdot 288\kappa \cdot 2^{-\mu}$ |
| A2 | 139 | 1151 | 571 | $15 \cdot 2^\mu$ kHz | $4 \cdot 2048\kappa \cdot 2^{-\mu}$ | $\mu_0 . 576\kappa \cdot 2^{-\mu}$ |
| A3 | 139 | 1151 | 571 | $15 \cdot 2^\mu$ kHz | $6 \cdot 2048\kappa \cdot 2^{-\mu}$ | $\mu_0 \cdot 864\kappa \cdot 2^{-\mu}$ |
| B1 | 139 | 1151 | 571 | $15. 2^\mu$ kHz | $2 \cdot 2048\kappa \cdot 2^{-\mu}$ | $\mu_0 \cdot 216\kappa \cdot 2^{-\mu}$ |
| B2 | 139 | 1151 | 571 | $15 \cdot 2^\mu$ kHz | $4 \cdot 2048\kappa \cdot 2^{-\mu}$ | $\mu_0 \cdot 360\kappa \cdot 2^{-\mu}$ |
| B3 | 139 | 1151 | 571 | $15 \cdot 2^\mu$ kHz | $6 \cdot 2048\kappa \cdot 2^{-\mu}$ | $\mu_0 . 504\kappa \cdot 2^{-\mu}$ |
| B4 | 139 | 1151 | 571 | $15 \cdot 2^\mu$ kHz | $12 \cdot 2048\kappa \cdot 2^{-\mu}$ | $\mu_0 . 936\kappa \cdot 2^{-\mu}$ |
| C0 | 139 | 1151 | 571 | $15. 2^\mu$ kHz | $2048\kappa \cdot 2^{-\mu}$ | $1240\kappa \cdot 2^{-\mu}$ |
| C2 | 139 | 1151 | 571 | $15 \cdot 2^\mu$ kHz | $4 \cdot 2048\kappa \cdot 2^{-\mu}$ | $2048\kappa \cdot 2^{-\mu}$ |

In the example in Table 17, $k$=64, and a time unit of the random access sequence time $N_u$ and the cyclic prefix length $N_{CP}^{RA}$ is $T_c = 1/(\Delta f_{max} \cdot N_f)$, where $\Delta f_{max} = 480 \cdot 10^3$ Hz, and $N_f = 4096$. Alternatively, $k$=128, and the time unit is $T_c = 1/(\Delta f_{max} \cdot N_f)$, where $\Delta f_{max} = 960 \cdot 10^3$ Hz, and $N_f = 4096$. Alternatively, $\kappa = 256$, and the corresponding time unit is $T_c = 1/(\Delta f_{max} \cdot N_f)$, where $\Delta f_{max} = 1920 \cdot 10^3$ Hz, and $N_f = 4096$.

In still another possible implementation, a first factor $\mu_0$ is introduced into a process of determining the random access time $N_{dur}^{RA}$. Alternatively, the random access time $N_{dur}^{RA}$ is determined based on at least the first factor $\mu_0$, where the first factor $\mu_0$ is an integer. For example, the first factor $\mu_0$=1, 2, 4, or 8. The following Table 18 provides an example of the random access time $N_{dur}^{RA}$ in different formats:

**Table 18**

| Format | $L_{RA}$ | | | $\Delta f^{RA}$ | $N_{dur}^{RA}$ |
|---|---|---|---|---|---|
| A1 | 139 | 1151 | 571 | $15 \cdot 2^\mu$ kHz | $2 \cdot \mu_0$ |
| A2 | 139 | 1151 | 571 | $15 \cdot 2^\mu$ kHz | $4 \cdot \mu_0$ |
| A3 | 139 | 1151 | 571 | $15 \cdot 2^\mu$ kHz | $6 \cdot \mu_0$ |

(continued)

| Format | $L_{RA}$ | | | $\Delta f^{RA}$ | $N_{dur}^{RA}$ |
|---|---|---|---|---|---|
| B1 | 139 | 1151 | 571 | $15 \cdot 2^{\mu}$ kHz | $2 \cdot \mu_0$ |
| B2 | 139 | 1151 | 571 | $15 \cdot 2^{\mu}$ kHz | $4 \cdot \mu_0$ |
| B3 | 139 | 1151 | 571 | $15 \cdot 2^{\mu}$ kHz | $6 \cdot \mu_0$ |
| B4 | 139 | 1151 | 571 | $15 \cdot 2^{\mu}$ kHz | $12 \cdot \mu_0$ |
| C0 | 139 | 1151 | 571 | $15 \cdot 2^{\mu}$ kHz | $2 \cdot \mu_0$ |
| C2 | 139 | 1151 | 571 | $15 \cdot 2^{\mu}$ kHz | $6 \cdot \mu_0$ |

In the example in Table 18, $k=64$, and a time unit of the random access duration $N_{dur}^{RA}$ is $T_c = 1/(\Delta f_{max} \cdot N_f)$, where $\Delta f_{max} = 480 \cdot 10^3$ Hz, and $N_f = 4096$. Alternatively, $k=128$, and the time unit is $T_c = 1/(\Delta f_{max} \cdot N_f)$, where $\Delta f_{max} = 960 \cdot 10^3$ Hz, and $N_f = 4096$. Alternatively, $\kappa = 256$, and the corresponding time unit is $T_c = 1/(\Delta f_{max} \cdot N_f)$, where $\Delta f_{max} = 1920 \cdot 10^3$ Hz, and $N_f = 4096$.

In different implementations, the first factor $\mu_0$ may be separately introduced into the random access time $N_u$, the cyclic prefix time $N_{CP}^{RA}$, or the random access time $N_{dur}^{RA}$, or the random access time $N_u$, the cyclic prefix time $N_{CP}^{RA}$, or the random access time $N_{dur}^{RA}$ may be determined based on the first factor $\mu_0$ in a manner shown in the following Table 19.

**Table 19**

| Format | $L_{RA}$ | | | $\Delta f^{RA}$ | $N_u$ | $N_{CP}^{RA}$ | $N_{dur}^{RA}$ |
|---|---|---|---|---|---|---|---|
| A1 | 139 | 1151 | 571 | $15 \cdot 2^{\mu}$ kHz | $2 \cdot \mu_0 \cdot 2048\kappa \cdot 2^{-\mu}$ | $\mu_0 \cdot 288\kappa \cdot 2^{-\mu}$ | $2 \cdot \mu_0$ |
| A2 | 139 | 1151 | 571 | $15 \cdot 2^{\mu}$ kHz | $4 \cdot \mu_0 \cdot 2048\kappa \cdot 2^{-\mu}$ | $\mu_0 \cdot 576\kappa \cdot 2^{-\mu}$ | $4 \cdot \mu_0$ |
| A3 | 139 | 1151 | 571 | $15 \cdot 2^{\mu}$ kHz | $6 \cdot \mu_0 \cdot 2048\kappa \cdot 2^{-\mu}$ | $\mu_0 \cdot 864K \cdot 2^{-\mu}$ | $6 \cdot \mu_0$ |
| B1 | 139 | 1151 | 571 | $15 \cdot 2^{\mu}$ kHz | $2 \cdot \mu_0 \cdot 2048\kappa \cdot 2^{-\mu}$ | $\mu_0 \cdot 216\kappa \cdot 2^{-\mu}$ | $2 \cdot \mu_0$ |
| B2 | 139 | 1151 | 571 | $15 \cdot 2^{\mu}$ kHz | $4 \cdot \mu_0 \cdot 2048\kappa \cdot 2^{-\mu}$ | $\mu_0 \cdot 360\kappa \cdot 2^{-\mu}$ | $4 \cdot \mu_0$ |
| B3 | 139 | 1151 | 571 | $15 \cdot 2^{\mu}$ kHz | $6 \cdot \mu_0 \cdot 2048\kappa \cdot 2^{-\mu}$ | $\mu_0 \cdot 504\kappa \cdot 2^{-\mu}$ | $6 \cdot \mu_0$ |
| B4 | 139 | 1151 | 571 | $15 \cdot 2^{\mu}$ kHz | $12 \cdot \mu_0 \cdot 2048\kappa \cdot 2^{-\mu}$ | $\mu_0 \cdot 936K \cdot 2^{-\mu}$ | $12 \cdot \mu_0$ |
| C0 | 139 | 1151 | 571 | $15 \cdot 2^{\mu}$ kHz | $\mu_0 \cdot 2048K \cdot 2^{-\mu}$ | $1240\kappa \cdot 2^{-\mu}$ | $2 \cdot \mu_0$ |
| C2 | 139 | 1151 | 571 | $15 \cdot 2^{\mu}$ kHz | $4 \cdot \mu_0 \cdot 2048\kappa \cdot 2^{-\mu}$ | $\mu_0 \cdot 2048K \cdot 2^{-\mu}$ | $6 \cdot \mu_0$ |

In different implementations, the first factor $\mu_0$ may be separately introduced into the random access time $N_u$ or the random access time $N_{dur}^{RA}$, or the random access time $N_u$ or the random access time $N_{dur}^{RA}$ may be determined based on the first factor $\mu_0$ in a manner shown in the following Table 20.

**Table 20**

| Format | $L_{RA}$ | | | $\Delta f^{RA}$ | $N_u$ | $N_{CP}^{RA}$ | $N_{dur}^{RA}$ |
|---|---|---|---|---|---|---|---|
| A1 | 139 | 1151 | 571 | $15 \cdot 2^{\mu}$ kHz | $2 \cdot \mu_0 \cdot 2048\kappa \cdot 2^{-\mu}$ | $288\kappa \cdot 2^{-\mu}$ | $2 \cdot \mu_0$ |
| A2 | 139 | 1151 | 571 | $15 \cdot 2^{\mu}$ kHz | $4 \cdot \mu_0 \cdot 2048\kappa \cdot 2^{-\mu}$ | $576\kappa \cdot 2^{-\mu}$ | $4 \cdot \mu_0$ |

(continued)

| Format | $L_{RA}$ | | | $\Delta f^{RA}$ | $N_u$ | $N_{CP}^{RA}$ | $N_{dur}^{RA}$ |
|---|---|---|---|---|---|---|---|
| A3 | 139 | 1151 | 571 | $15 \cdot 2^{\mu}$ kHz | $6 \cdot \mu_0 \cdot 2048\kappa \cdot 2^{-\mu}$ | $864\kappa \cdot 2^{-\mu}$ | $6 \cdot \mu_0$ |
| B1 | 139 | 1151 | 571 | $15 \cdot 2^{\mu}$ kHz | $2 \cdot \mu_0 \cdot 2048\kappa \cdot 2^{-\mu}$ | $216\kappa \cdot 2^{-\mu}$ | $2 \cdot \mu_0$ |
| B2 | 139 | 1151 | 571 | $15 \cdot 2^{\mu}$ kHz | $4 \cdot \mu_0 \cdot 2048\kappa \cdot 2^{-\mu}$ | $360\kappa \cdot 2^{-\mu}$ | $4 \cdot \mu_0$ |
| B3 | 139 | 1151 | 571 | $15 \cdot 2^{\mu}$ kHz | $6 \cdot \mu_0 \cdot 2048\kappa \cdot 2^{-\mu}$ | $504\kappa \cdot 2^{-\mu}$ | $6 \cdot \mu_0$ |
| B4 | 139 | 1151 | 571 | $15 \cdot 2^{\mu}$ kHz | $12 \cdot \mu_0 \cdot 2048\kappa \cdot 2^{-\mu}$ | $936\kappa \cdot 2^{-\mu}$ | $12 \cdot \mu_0$ |
| C0 | 139 | 1151 | 571 | $15 \cdot 2^{\mu}$ kHz | $\mu_0 \cdot 2048\kappa \cdot 2^{-\mu}$ | $1240\kappa \cdot 2^{-\mu}$ | $2 \cdot \mu_0$ |
| C2 | 139 | 1151 | 571 | $15 \cdot 2^{\mu}$ kHz | $4 \cdot \mu_0 \cdot 2048\kappa \cdot 2^{-\mu}$ | $2048\kappa \cdot 2^{-\mu}$ | $6 \cdot \mu_0$ |

In the example in Table 20, $k$=64, and a time unit of the random access time $N_u$, the cyclic prefix length $N_{CP}^{RA}$, or the random access time $N_{dur}^{RA}$ is $T_c = 1/(\Delta f_{max} \cdot N_f)$, where $\Delta f_{max} = 480 \cdot 10^3$ Hz, and $N_f = 4096$. Alternatively, k=128, and the time unit is $T_c = 1/(\Delta f_{max} \cdot N_f)$, where $\Delta f_{max} = 960 \cdot 10^3$ Hz, and $N_f = 4096$. Alternatively, $\kappa = 256$, and the corresponding time unit is $T_c = 1/(\Delta f_{max} \cdot N_f)$, where $\Delta f_{max} = 1920 \cdot 10^3$ Hz, and $N_f = 4096$.

For example, the first factor $\mu_0$ may have different values at different random access subcarrier spacings $\Delta f^{RA}$ or data subcarrier spacings $\Delta f^{Data}$, and values of the first factor $\mu_0$ at different subcarrier spacings are shown in Table 21 or Table 22.

**Table 21**

| $\Delta f^{RA}$ | $\Delta f^{Data}$ | $\mu_0$ |
|---|---|---|
| 240 kHz | 240 kHz | 1 |
| 240 kHz | 480 kHz | 1 |
| 240 kHz | 960 kHz | 2 |
| 240 kHz | 1920 kHz | 2 |
| 480 kHz | 480 kHz | 4 |
| 480 kHz | 960 kHz | 2 |
| 480 kHz | 1920 kHz | 1 |
| 960 kHz | 960 kHz | 8 |
| 960 kHz | 1920 kHz | 4 |

or,

**Table 22**

| $\Delta f^{RA}$ | $\Delta f^{Data}$ | $\mu_0$ |
|---|---|---|
| 240 kHz | 240 kHz | X0 |
| 240 kHz | 480 kHz | X1 |
| 240 kHz | 960 kHz | X2 |
| 240 kHz | 1920 kHz | X3 |
| 480 kHz | 480 kHz | X4 |
| 480 kHz | 960 kHz | X5 |
| 480 kHz | 1920 kHz | X6 |

(continued)

| $\Delta f^{RA}$ | $\Delta f^{Data}$ | $\mu_0$ |
|---|---|---|
| 960 kHz | 960 kHz | X7 |
| 960 kHz | 1920 kHz | X8 |

X0 to X8 are positive integers less than or equal to 8.

For example, corresponding to different ratios of the random access subcarrier spacing $\Delta f^{RA}$ to the data subcarrier spacing $\Delta f^{Data}$, the first factor $\mu_0$ may have different values, and the values of the first factor $\mu_0$ corresponding to the different ratios are shown in Table 23 or Table 24.

**Table 23**

| $\Delta f^{Data}/\Delta f^{RA}$ | $\mu_0$ |
|---|---|
| 1 | 1 |
| 2 | 2 |
| 4 | 2 |
| 8 | 4 |

**Table 24**

| $\Delta f^{Data}/\Delta f^{RA}$ | $\mu_0$ |
|---|---|
| 1 | Y0 |
| 2 | Y1 |
| 4 | Y2 |
| 8 | Y3 |

Y0 to Y3 are positive integers less than or equal to 8. It should be understood that only a ratio of 1, 2, 4, or 8 is used as an example for description herein. In practice, a quantity and a value range of ratios are not limited. For example, a value of 16 may also be used.

For example, the first factor $\mu_0$ may alternatively be indicated by a network device, as shown in Table 25 or Table 26.

**Table 25**

| Base station $\mu_0$ configuration information index | $\mu_0$ |
|---|---|
| 0 | 1 |
| 1 | 2 |

**Table 17a**

| Base station $\mu_0$ configuration information index | $\mu_0$ |
|---|---|
| 0 | Z0 |
| 1 | Z1 |

Z0 and Z1 are positive integers less than or equal to 8. It should be understood that only two values are used as an example for description herein (that is, indication information may be a field corresponding to one bit). In practice, a quantity of values is not limited (that is, a quantity of bits corresponding to the indication information is not limited). For example, two bits are used to indicate at most values of four $\mu_0$.

For example, the first factor $\mu_0$ is based on network device configuration information and the random access

subcarrier spacing $\Delta f^{RA}$. According to this embodiment, $\mu_0$ may be adjusted more flexible. This supports better random access performance and network deployment. For example, a value of $\mu_0$ is indicated by the network device.

**Table 26**

| Base station $\mu_0$ configuration information index | $\Delta f^{RA}$ = 120 kHz | $\Delta f^{RA}$ = 240 kHz | $\Delta f^{RA}$ = 480 kHz | $\Delta f^{RA}$ = 960 kHz |
|---|---|---|---|---|
| | $\mu_0$ | $\mu_0$ | $\mu_0$ | $\mu_0$ |
| 0 | 1 | 1 | 2 | 2 |
| 1 | 1 | 2 | 2 | 4 |

**Table 27**

| Base station $\mu_0$ configuration information index | $\Delta f^{RA}$ = 120 kHz | $\Delta f^{RA}$ = 240 kHz | $\Delta f^{RA}$ = 480 kHz | $\Delta f^{RA}$ = 960 kHz |
|---|---|---|---|---|
| | $\mu_0$ | $\mu_0$ | $\mu_0$ | $\mu_0$ |
| 0 | S00 | S01 | S02 | S03 |
| 1 | S10 | S11 | S12 | S13 |

S00 to S13 are positive integers less than or equal to 8. It should be understood that for each random access subcarrier spacing, only two values are used as an example for description herein (that is, indication information may be a field corresponding to one bit). In practice, a quantity of values is not limited (that is, a quantity of bits corresponding to the indication information is not limited). For example, two bits are used to indicate at most values of four $\mu_0$. This manner may also be directly extended to a case in which a random access subcarrier spacing is larger.

For example, the first factor $\mu_0$ is based on the base station configuration information and the data subcarrier spacing $\Delta f^{Data}$. According to this embodiment, the first factor $\mu_0$ may be adjusted more flexible. This supports better random access performance and network deployment. For example, a value of $\mu_0$ is indicated by the network device.

**Table 28**

| Base station $\mu_0$ configuration information index | $\Delta f^{Data}$ = 240 kHz | $\Delta f^{Data}$ = 480 kHz | $\Delta f^{Data}$ = 960 kHz |
|---|---|---|---|
| | $\mu_0$ | $\mu_0$ | $\mu_0$ |
| 0 | 1 | 2 | 2 |
| 1 | 2 | 2 | 4 |

**Table 29**

| Base station $\mu_0$ configuration information index | $\Delta f^{Data}$ = 240 kHz | $\Delta f^{Data}$ = 480 kHz | $\Delta f^{Data}$ = 960 kHz |
|---|---|---|---|
| | $\mu_0$ | $\mu_0$ | $\mu_0$ |
| 0 | T00 | T01 | T02 |
| 1 | T10 | T11 | T12 |

T00 to T12 are positive integers less than or equal to 8. It should be understood that for each random access subcarrier spacing, only two values are used as an example for description herein (that is, indication information may be a field corresponding to one bit). In practice, a quantity of values is not limited (that is, a quantity of bits corresponding to the indication information is not limited). For example, two bits are used to indicate at most values of four $\mu_0$. This manner may also be directly extended to a case in which a data subcarrier spacing is larger.

It may be understood that values of the first factor $\mu_0$ in Tables 21 to 29 may be applied to the implementations corresponding to Tables 16 to 20.

The foregoing describes in detail the method provided in embodiments of this application. Corresponding to the method provided in the foregoing method embodiments, an embodiment of this application further provides a corresponding apparatus including a corresponding module configured to perform the foregoing embodiments. The module may be software, hardware, or a combination of software and hardware.

FIG. 5 is a schematic diagram of a structure of a communication apparatus. The communication apparatus 600 may be a network device, a server, or a centralized controller, or may be a chip, a chip system, a processor, or the like that supports the network device, the server, or the centralized controller in implementing the foregoing methods. The apparatus may be configured to implement the method performed by the network device described in the foregoing method embodiments. For details, refer to the description in the foregoing method embodiments.

The apparatus 600 may include one or more processors 601, and the processor 601 may also be referred to as a processing unit, and can implement a specific control function. The processor 601 may be a general-purpose processor, a dedicated processor, or the like, for example, may be a baseband processor or a central processing unit. The baseband processor may be configured to process a communication protocol and communication data, and the central processing unit may be configured to: control a communication apparatus (for example, a base station, a baseband chip, a terminal, a terminal chip, a DU, or a CU), execute a software program, and process data of the software program.

In an optional design, the processor 601 may alternatively store instructions and/or data, and the instructions and/or the data may be run by the processor, so that the apparatus 600 performs the method described in the foregoing method embodiments.

In another optional design, the processor 601 may include a transceiver unit for implementing a receiving function and a sending function. For example, the transceiver unit may be a transceiver circuit, an interface, an interface circuit, or a communication interface. The transceiver circuit, the interface, or the interface circuit for implementing a receiving function and a sending function may be separated, or may be integrated together. The transceiver circuit, the interface, or the interface circuit may be configured to read or write code/data, or the transceiver circuit, the interface, or the interface circuit may be configured to transmit or transfer a signal.

In still another possible design, the apparatus 600 may include a circuit, and the circuit may implement a sending, receiving, or communication function in the foregoing method embodiments.

Optionally, the apparatus 600 may include one or more memories 602. Instructions may be stored in the memory 602, and the instructions may be run on the processor, so that the apparatus 600 performs the method described in the foregoing method embodiments. Optionally, the memory may further store data. Optionally, the processor may alternatively store instructions and/or data. The processor and the memory may be separately disposed, or may be integrated together. For example, a correspondence described in the foregoing method embodiments may be stored in the memory or stored in the processor.

Optionally, the apparatus 600 may further include a transceiver 603 and/or an antenna 604. The processor 1501 may be referred to as a processing unit, and controls the apparatus 600. The transceiver 603 may be referred to as a transceiver unit, a transceiver machine, a transceiver circuit, a transceiver apparatus, a transceiver module, or the like, and is configured to implement a transceiver function.

Optionally, the apparatus 600 in this embodiment of this application may be configured to perform the method described in FIG. 4 in this embodiment of this application.

The processor and the transceiver described in this application may be implemented in an integrated circuit (integrated circuit, IC), an analog IC, a radio frequency integrated circuit RFIC, a mixed signal IC, an application-specific integrated circuit (application-specific integrated circuit, ASIC), a printed circuit board (printed circuit board, PCB), an electronic device, and the like. The processor and the transceiver may also be manufactured by using various IC process technologies, such as a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), gallium arsenide (GaAs), and the like.

The apparatus described in the foregoing embodiment may be a network device or a terminal device. However, a scope of the apparatus described in this application is not limited thereto, and a structure of the apparatus may not be limited in FIG. 11. The apparatus may be an independent device or may be part of a larger device. For example, the apparatus may be:

(1) an independent integrated circuit IC, a chip, or a chip system or subsystem;
(2) a set having one or more ICs, where optionally, the IC set may also include a storage component configured to store data and/or instructions;
(3) an ASIC, such as a modem (MSM);
(4) a module that can be embedded in another device;
(5) a receiver, a terminal, an intelligent terminal, a cellular phone, a wireless device, a handset, a mobile unit, a vehicle-mounted device, a network device, a cloud device, an artificial intelligence device, a machine device, a household device, a medical device, an industrial device, and the like;
(6) others, or the like.

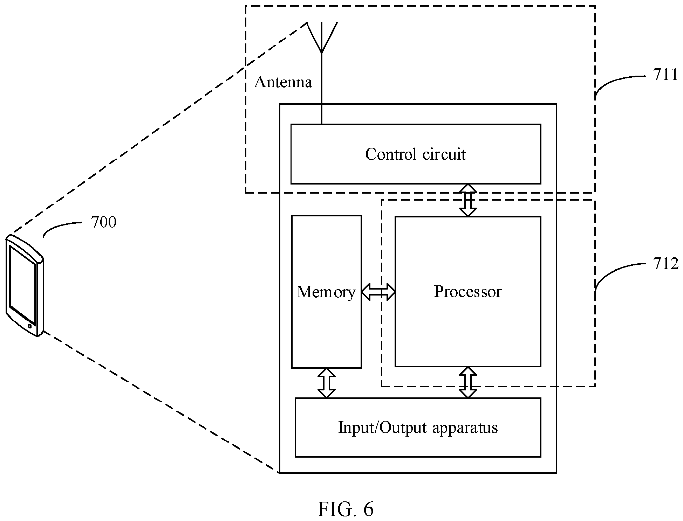

The application further provides a schematic diagram of a structure of another communication apparatus. The communication apparatus is applicable to the foregoing method embodiments, and is configured to perform steps performed by the terminal device in the foregoing method. The communication apparatus may be a terminal device, or may be a chip, a chip system, a processor, or the like that supports the terminal device in implementing the foregoing method. For ease of description, in FIG. 6, an example in which the communication apparatus is a terminal device is used for description. FIG. 6 shows only main components of the terminal device. As shown in FIG. 6, a terminal device 700 includes a processor, a memory, a control circuit, an antenna, and an input/output apparatus. The processor is mainly configured to: process a communication protocol and communication data, control the entire terminal, execute a software program, and process data of the software program. The memory is mainly configured to store the software program and data. The radio frequency circuit is mainly configured to convert a baseband signal and a radio frequency signal and process the radio frequency signal. The antenna is mainly configured to receive and transmit a radio frequency signal in a form of an electromagnetic wave. The input/output apparatus, such as a touchscreen, a display, a keyboard, or the like, is mainly configured to receive data input by a user and output data to the user.

After the terminal device is powered on, the processor may read the software program in a storage unit, parse and execute instructions of the software program, and process data of the software program. When data needs to be sent wirelessly, the processor performs baseband processing on to-be-sent data, and outputs a baseband signal to the radio frequency circuit. The radio frequency circuit processes the baseband signal to obtain a radio frequency signal, and sends the radio frequency signal to an outside through the antenna in a form of an electromagnetic wave. When data is sent to the terminal device, the radio frequency circuit receives the radio frequency signal through the antenna. The radio frequency signal is further converted into the baseband signal, and the baseband signal is output to the processor. The processor converts the baseband signal into data and processes the data.

For ease of description, FIG. 6 shows only one memory and one processor. In an actual terminal device, there may be a plurality of processors and memories. The memory may also be referred to as a storage medium, a storage device, or the like. This is not limited in this embodiment of this application.

In an optional implementation, the processor may include a baseband processor and a central processing unit. The baseband processor is mainly configured to process a communication protocol and communication data. The central processing unit is mainly configured to: control the entire terminal device, execute a software program, and process data of the software program. The processor in FIG. 6 integrates functions of the baseband processor and the central processing unit. A person skilled in the art may understand that the baseband processor and the central processing unit may alternatively be independent processors, and are interconnected through a technology, for example, a bus. A person skilled in the art may understand that the terminal device may include a plurality of baseband processors to adapt to different network standards, the terminal device may include a plurality of central processing units to enhance a processing capability of the terminal device, and the components of the terminal device may be connected through various buses. The baseband processor may also be expressed as a baseband processing circuit or a baseband processing chip. The central processing unit may also be expressed as a central processing circuit or a central processing chip. A function of processing a communication protocol and communication data may be set in a processor, or may be stored in a storage unit in a form of a software program, and the processor executes the software program to implement a baseband processing function.

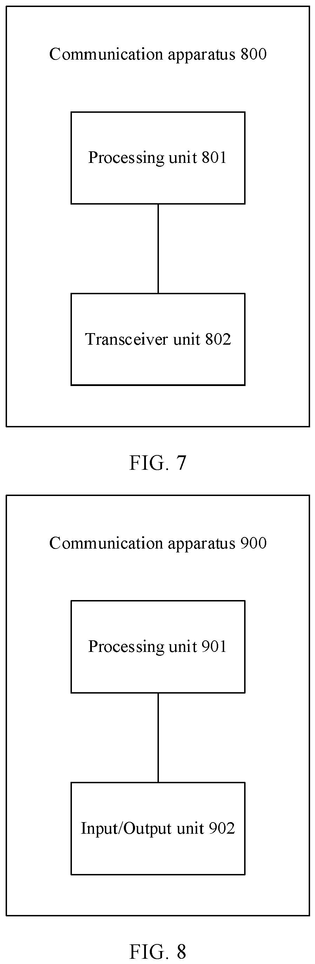

In an example, an antenna and a control circuit having a transceiver function may be considered as a transceiver unit 711 of the terminal device 700, and a processor having a processing function may be considered as a processing unit 712 of the terminal device 700. As shown in FIG. 7, the terminal device 700 includes the transceiver unit 711 and the processing unit 1612. The transceiver unit may also be referred to as a transceiver, a transceiver machine, a transceiver apparatus, or the like. Optionally, a component that is in the transceiver unit 711 and that is configured to implement a receiving function may be considered as a receiving unit, and a component that is in the transceiver unit 711 and that is configured to implement a sending function may be considered as a sending unit. In other words, the transceiver unit 711 includes the receiving unit and the sending unit. For example, the receiving unit may also be referred to as a receiver, a receiver, a receiving circuit, or the like, and the sending unit may be referred to as a transmitter, a transmitter machine, a transmitting circuit, or the like. Optionally, the receiving unit and the sending unit may be an integrated unit, or may be a plurality of independent units. The receiving unit and the sending unit may be located in one geographical location, or may be distributed in a plurality of geographical locations.

As shown in FIG. 7, another embodiment of this application provides a communication apparatus 800. The apparatus may be a network device, or may be a component (for example, an integrated circuit or a chip) of the network device. Alternatively, the apparatus may be another communication module, configured to implement the method in the method embodiments of this application. The communication apparatus 800 may include a processing unit 801 (or referred to as a processing unit) and an input/output unit 802.

In a possible design, the input/output unit 802 is configured to send a synchronization signal/physical broadcast channel block, and is configured to receive a random access signal. The random access signal is sent by the terminal device based on a random access opportunity and a random access preamble, and the random access opportunity and the random access preamble are associated with the synchronization signal/physical broadcast channel block. There is a correspondence between the random access opportunity and/or the random access preamble and at least one of the following:

a data subcarrier spacing $\Delta f^{Data}$, a random access subcarrier spacing $\Delta f^{RA}$, or a ratio $\Delta f^{Data}/\Delta f^{RA}$ of the random access subcarrier spacing $\Delta f^{RA}$ to the data subcarrier spacing $\Delta f^{Data}$, where at least one of the random access subcarrier spacing $\Delta f^{RA}$ and the data subcarrier spacing $\Delta f^{Data}$, is greater than 120 kHz.

The processing unit 801 is configured to parse the random access signal.

For designs of the random access opportunity, the random access preamble, and a related parameter, refer to the foregoing method embodiments. Details are not described herein again.

In a possible design, one or more units in FIG. 7 may be implemented by one or more processors, implemented by one or more processors and memories, implemented by one or more processors and transceivers, or implemented by one or more processors, memories, and transceivers. This is not limited in this embodiment of this application. The processor, the memory, and the transceiver may be separately disposed, or may be integrated.

The communication apparatus 800 has a function of implementing the network device described in embodiments of this application. For example, the communication apparatus includes a corresponding module, unit, or means (means) used by the network device to perform the steps involved in the network device described in embodiments of this application. The function, unit, or means (means) may be implemented by using software, or implemented by using hardware, or may be implemented by hardware by executing corresponding software, or may be implemented by combining software and hardware. For details, refer to the corresponding description in the foregoing corresponding method embodiments.

As shown in FIG. 8, another embodiment of this application provides a communication apparatus 900. The apparatus may be a terminal device, or may be a component (for example, an integrated circuit or a chip) of the terminal device. Alternatively, the communication apparatus may be another communication module, configured to implement the method in the method embodiments of this application. The communication apparatus 900 may include a processing unit 901 (or referred to as a processing module) and an input/output unit 902.

The processing unit 901 determines, based on a measurement result of a synchronization signal/physical broadcast channel block SS/PBCH block, a random access opportunity and a random access preamble that are associated with the synchronization signal/physical broadcast channel block.

The input/output unit 902 sends a random access signal based on the random access opportunity and the random access preamble. There is a correspondence between the random access opportunity and/or the random access preamble and at least one of the following: a data subcarrier spacing $\Delta f^{Data}$, a random access subcarrier spacing $\Delta f^{RA}$, or a ratio $\Delta f^{Data}/\Delta f^{RA}$ of the random access subcarrier spacing $\Delta f^{RA}$ to the data subcarrier spacing $\Delta f^{Data}$. At least one of the random access subcarrier spacing $\Delta f^{RA}$ and the data subcarrier spacing $\Delta f^{Data}$, is greater than 120 kHz.

For designs of the random access opportunity, the random access preamble, and a related parameter, refer to the foregoing method embodiments. Details are not described herein again.

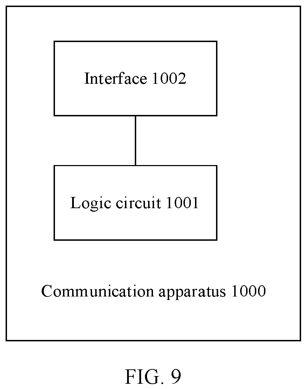

In a possible design, one or more units in FIG. 9 may be implemented by one or more processors, implemented by one or more processors and memories, implemented by one or more processors and transceivers, or implemented by one or more processors, memories, and transceivers. This is not limited in this embodiment of this application. The processor, the memory, and the transceiver may be separately disposed, or may be integrated.

A communication apparatus 1000 has a function of implementing the network device described in embodiments of this application. For example, the apparatus includes a corresponding module, unit, or means (means) used by the network device to perform the steps involved in the network device described in embodiments of this application. The function, unit, or means (means) may be implemented by using software, or implemented by using hardware, or may be implemented by hardware executing corresponding software, or may be implemented by combining software and hardware. For details, refer to the corresponding description in the foregoing corresponding method embodiments.

In another possible implementation, when the communication apparatus is a chip system, for example, a chip system in a network device or a chip system in a terminal device, the processing unit 801 or the processing unit 901 may be one or more logic circuits. The input/output unit 802 or 902 may be an input/output interface, or referred to as a communication interface, an interface circuit, an interface, or the like. Alternatively, the input/output unit 802 or the input/output unit 902 may be a sending unit and a receiving unit. The sending unit may be an output interface, and the receiving unit may be an input interface. The sending unit and the receiving unit are integrated into one unit, for example, an input/output interface. As shown in FIG. 9, the communication apparatus shown in FIG. 9 includes a logic circuit 1901 and an interface 1002. That is, the processing unit 801 or the processing unit 901 may be implemented by using the logic circuit 1901, and a transceiver unit 802 or a transceiver unit 902 may be implemented through the interface 1002. The logic circuit 1901 may be a chip, a processing circuit, an integrated circuit, a system on chip (system on chip, SoC), or the like. The interface 1002 may be a communication interface, an input/output interface, or the like. In this embodiment of this application, the logic circuit and the interface may be further coupled to each other. A specific connection manner of the logical circuit and the interface is not limited in this embodiment of this application.

In some embodiments of this application, the logic circuit and the interface may be configured to perform a function, an operation, or the like performed by the network device.

For example, the interface 1002 is configured to send a synchronization signal/physical broadcast channel block, and is configured to receive a random access signal. The random access signal is sent by the terminal device based on a random access opportunity and a random access preamble, and the random access opportunity and the random access preamble are associated with the synchronization signal/physical broadcast channel block. There is a correspondence between the random access opportunity and/or the random access preamble and at least one of the following:

a data subcarrier spacing $\Delta f^{Data}$, a random access subcarrier spacing $\Delta f^{RA}$, or a ratio $\Delta f^{Data}/\Delta f^{RA}$ of the random access subcarrier spacing $\Delta f^{RA}$ to the data subcarrier spacing $\Delta f^{Data}$, where at least one of the random access subcarrier spacing $\Delta f^{RA}$ and the data subcarrier spacing $\Delta f^{Data}$, is greater than 120 kHz.

The logic circuit 1001 is configured to parse the random access signal.

In some embodiments of this application, the logic circuit and the interface may be configured to perform a function, an operation, or the like performed by the terminal device.

For example, the logic circuit 1001 is configured to determine, based on a measurement result of a synchronization signal/physical broadcast channel block SS/PBCH block, a random access opportunity and a random access preamble that are associated with the synchronization signal/physical broadcast channel block.

The interface 1002 sends a random access signal based on the measurement result, the random access opportunity, and the random access preamble. There is a correspondence between the random access opportunity and/or the random access preamble and at least one of the following: a data subcarrier spacing $\Delta f^{Data}$, a random access subcarrier spacing $\Delta f^{RA}$, or a ratio $\Delta f^{Data}/\Delta f^{RA}$ of the random access subcarrier spacing $\Delta f^{RA}$ to the data subcarrier spacing $\Delta f^{Data}$. At least one of the random access subcarrier spacing $\Delta f^{RA}$ and the data subcarrier spacing $\Delta f^{Data}$, is greater than 120 kHz.

For designs of the random access opportunity and the random access preamble, refer to the foregoing method embodiments. Details are not described herein again.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features are implemented in combination with another feature as required. Correspondingly, the apparatus provided in this embodiment of this application may also correspondingly implement these features or functions. Details are not described herein again.

A person skilled in the art may further understand that various illustrative logical blocks (illustrative logical blocks) and steps (steps) listed in embodiments of this application may be implemented by using electronic hardware, computer software, or a combination thereof. Whether such a function is implemented by using hardware or software depends on a specific application and a design requirement of an overall system. For a corresponding application, a person skilled in the art may implement the function by using various methods. However, it should not be understood that the implementation goes beyond the protection scope of embodiments of this application.

It may be understood that the processor in this embodiment of this application may be an integrated circuit chip, and has a signal processing capability. In an implementation process, the steps in the foregoing method embodiments may be completed by using an integrated logic circuit of hardware or instructions in a form of software in the processor. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component.

The solutions described in this application may be implemented in various manners. For example, these technologies may be implemented by using hardware, software, or a combination of hardware and software. For a hardware implementation, the processing unit configured to perform these techniques in the communication device (for example, a base station, a terminal, a network entity, or a chip) may be implemented in one or more general-purpose processors, DSPs, digital signal processing devices, ASICs, programmable logic devices, FPGAs, other programmable logic devices, discrete gates or transistor logic, discrete hardware components, or any combination thereof. The general-purpose processor may be a microprocessor. Optionally, the general-purpose processor may also be any conventional processor, controller, microcontroller, or state machine. The processor may also be implemented by a combination of computing devices, such as a digital signal processor and a microprocessor, a plurality of microprocessors, one or more microprocessors combined with a digital signal processor core, or any other similar configuration.

It may be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. Through an example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and method described in the text are intended to include, but are not limited to these and any other suitable types of memories.

This application further provides a computer-readable medium. The computer-readable medium stores a computer program. When the computer program is executed by a computer, a function of any one of the foregoing method embodiments is implemented.

This application further provides a computer program product. When the computer program product is executed by a computer, a function of any one of the foregoing method embodiments is implemented.

All or some of the foregoing embodiments may be implemented by using software, hardware, firmware, or any combination thereof. When software is used for an implementation, the implementation may be totally or partially implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

It may be understood that the "embodiment" mentioned throughout the specification means that specific features, structures, or characteristics related to the embodiment are included in at least one embodiment of this application. Therefore, embodiments in the entire specification may not necessarily refer to a same embodiment. Furthermore, these specific features, structures, or characteristics may be combined in one or more embodiments in any suitable manner. It may be understood that, in various embodiments of this application, sequence numbers of the foregoing processes do not mean an execution sequence. The execution sequence of the processes should be determined based on functions and internal logic of the processes, and does not constitute any limitation on the implementation processes of embodiments of this application.

It may be understood that in this application, "when" and "if" refer to corresponding processing performed by the apparatus in an objective case, are not intended to limit time, are not required to perform a determining action during an implementation of the apparatus, and do not mean that there is any other limitation.

"Simultaneously" in this application may be understood as being at a same time point, may be understood as being in a period of time, or may be understood as being in a same periodicity.

A person skilled in the art may understand that various numbers such as first, second, and the like in this application are merely distinguished for ease of description, but are not intended to limit the scope of this embodiment of this application. A specific value of a number (which may also be referred to as an index), a specific value of a quantity, and a location in this application are merely used for an illustration purpose, are not unique representation forms, and are not intended to limit the scope of this embodiment of this application. Various numbers such as first, second, and the like in this application are merely distinguished for ease of description, and are not intended to limit the scope of this embodiment of this application.

An element represented by a singular number in this application is intended to represent "one or more", but not "one and only one", unless otherwise specified. In this application, unless otherwise specified, "at least one" is intended to represent "one or more", and "a plurality of" is intended to represent "two or more".

In addition, terms "system" and "network" are often used interchangeably herein. A term "and/or" in this specification is merely an association relationship for describing associated objects, and represents that three relationships may exist. For example, A and/or B may represent that only A exists, both A and B exist, and only B exists. A may be a singular number or a plural number, and B may be a singular number or a plural number. A character "/" generally represents an "or" relationship between the associated objects.

In this specification, a term "at least one of" or "at least one type of" means all or any combination of the listed items, for example, "at least one of A, B, and C" may represent six relationships: only A exists, only B exists, only C exists, both A and B exist, both B and C exist, and A, B, and C all exist. A may be a singular number or a plural number, B may be a singular number or a plural number, and C may be a singular number or a plural number.

It may be understood that, in embodiments of this application, "B corresponding to A" represents that B is associated with A, and B may be determined based on A. However, it should be further understood that determining B based on A does not mean that B is determined only based on A. B may also be determined based on A and/or other information.

Correspondences shown in tables in this application may be configured, or may be predefined. Values of information in the tables are merely examples, and may be configured as other values. This is not limited in this application. When configuring a correspondence between information and a parameter, it is not necessarily necessary to configure all correspondences shown in tables. For example, in the tables in this application, correspondences shown in some rows may not be configured. For another example, proper deformation adjustment, for example, splitting and merging, may be performed based on the foregoing tables. Names of parameters indicated by headings in the foregoing tables may alternatively use other names that can be understood by the communication apparatus, and values or representation manners of the parameters may alternatively use other values or representation manners that can be understood by the communication apparatus. When the foregoing tables are implemented, another data structure may also be used, for example, an array, a queue, a container, a stack, a linear table, a pointer, a linked list, a tree, a graph, a structure, a class, a heap, a hash table, or a hash table.

Predefinition in this application may be understood as definition, pre-definition, storage, pre-store, pre-negotiation, pre-configuration, solidification, or pre-burning.

A person of ordinary skill in the art may understand that units and algorithm steps in the examples described with reference to embodiments disclosed in this specification may be implemented by electronic hardware or a combination of computer software and electronic hardware. Whether these functions are performed in a hardware or software manner depends on a specific application and a design constraint condition of a technical solution. A person skilled in the art may use different methods to implement the described functions for each specific application. However, it should not be considered that such an implementation goes beyond the scope of this application.

A person of ordinary skill in the art may understand that, for a purpose of convenient and brief description, for a specific working process of the foregoing system, apparatus, and unit, refer to a corresponding process in the foregoing method embodiments. Details are not described herein again.

It may be understood that the system, apparatus, and method described in this application may alternatively be implemented in another manner. For example, the described apparatus embodiment is merely an example. For example, unit division is merely logical function division and may be other division in an actual implementation. For example, a plurality of units or components may be combined or integrated into another system, or some features may be ignored, or are not performed. In addition, the displayed or discussed mutual coupling or direct coupling or communication connection may be implemented through some interfaces, and the indirect coupling or communication connection of the apparatuses or units may be implemented in an electrical, a mechanical, or another form.

The units described as separate parts may be or may not be physically separate, and parts displayed as units may be or may not be physical units, that is, may be located in one place, or may be distributed on a plurality of network units. Some or all of the units may be selected according to actual requirements to achieve the objectives of the solutions in this embodiment.

In addition, functional units in embodiments of this application may be integrated into one processing unit, each of the units may exist alone physically, or two or more units are integrated into one unit.

If the function is implemented in a form of a software functional unit and sold or used as an independent product, the function may be stored in a computer-readable storage medium. Based on this understanding, the technical solutions of this application essentially, part contributing to the conventional technology, or some of the technical solutions may be implemented in a form of a software product. A computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

For same or similar parts in embodiments of this application, reference may be made to each other. In each embodiment and each implementation/implementation method/implementation in each embodiment of this application, unless otherwise specified or logically conflicted, terms and/or descriptions of different embodiments and implementations/implementation methods/implementations in embodiments are consistent and may be referenced by each other. Technical features in different embodiments and implementations/implementation methods/implementations in each embodiment may be combined to form a new embodiment, an implementation, an implementation method, or an implementation according to an internal logical relationship of the technical features. The foregoing implementations of this application constitute no limitation on the protection scope of this application.

The foregoing descriptions are merely specific implementations of this application, but are not intended to limit the protection scope of this application. Any variation or replacement readily figured out by a person skilled in the art within a technical scope disclosed in this application shall fall within the protection scope of this application.

**Claims**

1. A random access method, comprising:

   determining, by a terminal device based on a measurement result of a synchronization signal/physical broadcast channel block SS/PBCH block, a random access opportunity and a random access preamble that are associated with the synchronization signal/physical broadcast channel block; and
   sending, by the terminal device, a random access signal based on the random access opportunity and the random access preamble, wherein there is a correspondence between the random access opportunity and/or the random access preamble and at least one of the following:
   a data subcarrier spacing $\Delta f^{Data}$, or a ratio $\Delta f^{Data}/\Delta f^{RA}$ of a random access subcarrier spacing $\Delta f^{RA}$ to the data subcarrier spacing $\Delta f^{Data}$, wherein at least one of the random access subcarrier spacing $\Delta f^{RA}$ and the data subcarrier spacing $\Delta f^{Data}$ is greater than 120 kHz.

2. A random access method, wherein the method comprises:

   sending, by a network device, a synchronization signal/physical broadcast channel block; and
   receiving, by the network device, a random access signal, wherein the random access signal is sent by a terminal device based on a random access opportunity and a random access preamble, the random access opportunity and the random access preamble are associated with the synchronization signal/physical broadcast channel block, and there is a correspondence between the random access opportunity and/or the random access preamble and at least one of the following:
   a data subcarrier spacing $\Delta f^{Data}$, or a ratio $\Delta f^{Data}/\Delta f^{RA}$ of a random access subcarrier spacing $\Delta f^{RA}$ to the data subcarrier spacing $\Delta f^{Data}$, wherein at least one of the random access subcarrier spacing $\Delta f^{RA}$ and the data subcarrier spacing $\Delta f^{Data}$ is greater than 120 kHz.

3. The method according to claim 1 or 2, wherein when the ratio $\Delta f^{Data}/\Delta f^{RA}$ is 4, random access duration $N_{\mathrm{dur}}^{\mathrm{RA}}$ is any one of 5.25, 5.5, or 5.75; or

   when the ratio $\Delta f^{Data}/\Delta f^{RA}$ is 8, random access duration $N_{\mathrm{dur}}^{\mathrm{RA}}$ is any one of 5.5, 5.625, or 5.75, wherein a unit of the random access duration $N_{dur}^{RA}$ is orthogonal frequency division multiplexing OFDM symbol time corresponding to the random access subcarrier spacing $\Delta f^{RA}$.

4. The method according to claim 1 or 2, wherein when the ratio $\Delta f^{Data}/\Delta f^{RA}$ is 4, random access duration $N_{\mathrm{dur}}^{\mathrm{RA}}$ is any one of 21, 22, or 23; or

   when the ratio $\Delta f^{Data}/\Delta f^{RA}$ is 8, random access duration $N_{\mathrm{dur}}^{\mathrm{RA}}$ is any one of 44, 45, or 46, wherein a unit of the random access duration $N_{dur}^{RA}$ is OFDM symbol time corresponding to the data subcarrier spacing $\Delta f^{Data}$.

5. The method according to any one of claims 1 to 4, wherein guard time GT is further comprised after the random access preamble and before an uplink or a downlink OFDM symbol, and when the ratio $\Delta f^{Data}/\Delta f^{RA}$ is 4, the guard time GT is any one of 0.25 or 0.5; or

   when the ratio $\Delta f^{Data}/\Delta f^{RA}$ is 8, the guard time GT is any one of 0.125, 0.25, 0.375, or 0.5, wherein a unit of the GT is the OFDM symbol time corresponding to the random access subcarrier spacing $\Delta f^{RA}$.

6. The method according to any one of claims 1 to 4, wherein guard time GT is further comprised after the random access preamble and before an uplink or a downlink OFDM symbol, and

   when the ratio $\Delta f^{Data}/\Delta f^{RA}$ is 4, the guard time GT is any one of 1 or 2; or

when the ratio $\Delta f^{Data}/\Delta f^{RA}$ is 8, the guard time GT is any one of 1, 2, 3, or 4, wherein
a unit of the guard time GT is the OFDM symbol time corresponding to the data subcarrier spacing $\Delta f^{Data}$.

7. The method according to claim 1 or 2, wherein when the random access subcarrier spacing $\Delta f^{RA}$ is equal to 120 kHz, and $\Delta f^{Data}$ is 480 kHz, random access time $N_{dur}^{RA}$ is any one of 5.25, 5.5, or 5.75; or

when $\Delta f^{Data}$ is 960 kHz, random access time $N_{dur}^{RA}$ is any one of 5.5, 5.625, or 5.75, wherein

a unit of the random access time $N_{dur}^{RA}$ is OFDM symbol time corresponding to the random access subcarrier spacing $\Delta f^{RA}$.

8. The method according to claim 1 or 2, wherein the random access subcarrier spacing $\Delta f^{RA}$ is equal to 120 kHz, and

when $\Delta f^{Data}$ is 480 kHz, random access time $N_{dur}^{RA}$ is any one of 21, 22, or 23; or

when $\Delta f^{Data}$ is 960 kHz, random access time $N_{dur}^{RA}$ is any one of 44, 45, or 46, wherein

a unit of the random access time $N_{dur}^{RA}$ is OFDM symbol time corresponding to the data subcarrier spacing $\Delta f^{Data}$.

9. The method according to any one of claim 1, 2, 7, or 8, wherein guard time GT is further comprised after the random access preamble and before an uplink or a downlink OFDM symbol, and the random access subcarrier spacing $\Delta f^{RA}$ is equal to 120 kHz; and

when $\Delta f^{Data}$ is 480 kHz, the guard time GT is any one of 0.25 or 0.5; or
when $\Delta f^{Data}$ is 960 kHz, the guard time GT is any one of 0.125, 0.25, 0.375, or 0.5, wherein
a unit of the guard time GT is the OFDM symbol time corresponding to the random access subcarrier spacing $\Delta f^{RA}$.

10. The method according to any one of claim 1, 2, 7, or 8, wherein guard time GT is further comprised after the random access preamble and before an uplink or a downlink OFDM symbol, and the random access subcarrier spacing $\Delta f^{RA}$ is equal to 120 kHz; and

when $\Delta f^{Data}$ is 480 kHz, the guard time GT is any one of 2 or 4; or
when $\Delta f^{Data}$ is 960 kHz, the guard time GT is any one of 1, 2, 3, or 4, wherein
a unit of the guard time GT is the OFDM symbol time corresponding to the data subcarrier spacing $\Delta f^{Data}$.

11. The method according to any one of claims 1 to 10, wherein the random access preamble comprises random access preamble duration $N_u$ determined based on a first factor $\mu_0$ and a second factor $\mu$, wherein $\mu_0$ is equal to 1, 2, 4, or 8, and $\mu$ is any value in {0 to 9}.

12. A terminal device, wherein the terminal device comprises a memory and a processor connected to the memory, the memory is configured to store instructions, and the processor is configured to execute the instructions, so that the terminal device performs the method according to any one of claims 1 and 3 to 11.

13. A network device, wherein the network device comprises a memory and a processor connected to the memory, the memory is configured to store instructions, and the processor is configured to execute the instructions, so that the network device performs the method according to any one of claims 1 and 3 to 11.

14. A communication apparatus, comprising a processing unit and an input/output unit, wherein

the processing unit is configured to determine, based on a measurement result of a synchronization signal/physical broadcast channel block SS/PBCH block, a random access opportunity and a random access preamble that are associated with the synchronization signal/physical broadcast channel block; and
the input/output unit is configured to send a random access signal based on the random access opportunity and the random access preamble, wherein there is a correspondence between the random access opportunity and/or the random access preamble and at least one of the following:
a data subcarrier spacing $\Delta f^{Data}$, or a ratio $\Delta f^{Data}/\Delta f^{RA}$ of a random access subcarrier spacing $\Delta f^{RA}$ to the data subcarrier spacing $\Delta f^{Data}$, wherein at least one of the random access subcarrier spacing $\Delta f^{RA}$ and the data

subcarrier spacing $\Delta f^{Data}$ is greater than 120 kHz.

15. A communication apparatus, comprising an input/output unit, wherein

the input/output unit is configured to send a synchronization signal/physical broadcast channel block; and
the input/output unit is configured to receive a random access signal, wherein the random access signal is sent by a terminal device based on a random access opportunity and a random access preamble, the random access opportunity and the random access preamble are associated with the synchronization signal/physical broadcast channel block, and there is a correspondence between the random access opportunity and/or the random access preamble and at least one of the following:
a data subcarrier spacing $\Delta f^{Data}$, or a ratio $\Delta f^{Data}/\Delta f^{RA}$ of a random access subcarrier spacing $\Delta f^{RA}$ to the data subcarrier spacing $\Delta f^{Data}$, wherein at least one of the random access subcarrier spacing $\Delta f^{RA}$ and the data subcarrier spacing $\Delta f^{Data}$ is greater than 120 kHz.

16. A computer-readable storage medium, comprising instructions, wherein when the instructions are executed by a computer, the method according to any one of claims 1 to 11 is performed.

17. A computer program product comprising instructions, wherein when the computer program product runs on a computer, the computer is enabled to perform the method according to any one of claims 1 to 11.

100

FIG. 1

CP              *N*u              GT

FIG. 2

FIG. 3

Terminal
device

Network
device

S401: Synchronization/Broadcast signal block

The terminal device receives the synchronization signal block, and determines a random access opportunity and a random access preamble sequence that are associated with the synchronization signal block, where there is a correspondence between the random access opportunity and at least one of the following: a random access subcarrier spacing, a data subcarrier spacing, or a ratio of the random access subcarrier spacing to the data subcarrier spacing

S402: Random access signal

FIG. 4

Communication apparatus 600

Processor 601

Memory 602

Transceiver 603

Transceiver 604

FIG. 5

Antenna

Control circuit

711

Memory ⟷ Processor

712

Input/Output apparatus

700

FIG. 6

Communication apparatus 800

Processing unit 801

Transceiver unit 802

FIG. 7

Communication apparatus 900

Processing unit 901

Input/Output unit 902

FIG. 8

Interface 1002

Logic circuit 1001

Communication apparatus 1000

FIG. 9

## INTERNATIONAL SEARCH REPORT

| International application No. |
|---|
| **PCT/CN2021/072309** |

### A. CLASSIFICATION OF SUBJECT MATTER

H04W 74/08(2009.01)i

According to International Patent Classification (IPC) or to both national classification and IPC

### B. FIELDS SEARCHED

Minimum documentation searched (classification system followed by classification symbols)

H04W; H04L; H04B

Documentation searched other than minimum documentation to the extent that such documents are included in the fields searched

Electronic data base consulted during the international search (name of data base and, where practicable, search terms used)

CNPAT; CNKI; WPI; EPODOC; 3GPP: 随机接入, 载波, 间隔, 时刻, 机会, 前导, 比, 120, 480, 960, rach, occasion, opportunity, chance, preamble, ss, pbch, space, data, ratio, rate

### C. DOCUMENTS CONSIDERED TO BE RELEVANT

| Category* | Citation of document, with indication, where appropriate, of the relevant passages | Relevant to claim No. |
|---|---|---|
| A | CN 109565889 A (LG ELECTRONICS INC.) 02 April 2019 (2019-04-02) description, paragraphs [0105]-[0111] and [0200]-[0245] | 1-17 |
| A | SAMSUNG. "Corrections on PRACH formats" *3GPP TSG RAN WG1 Meeting AdHoc#1 R1-1800417*, 26 January 2018 (2018-01-26), entire document | 1-17 |
| A | 3GPP TSG RAN. "Physical channels and modulation (Release 16)" *3GPP TS 38.211 V16.4.0*, 31 December 2020 (2020-12-31), section 6.3.3.2 | 1-17 |
| A | CN 111869307 A (IDAC HOLDINGS, INC.) 30 October 2020 (2020-10-30) entire document | 1-17 |
| A | US 2020100297 A1 (SAMSUNG ELECTRONICS CO., LTD.) 26 March 2020 (2020-03-26) entire document | 1-17 |
| A | US 2020053779 A1 (COMCAST CABLE COMMUNICATIONS, LLC.) 13 February 2020 (2020-02-13) entire document | 1-17 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 September 2021** | **21 October 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/072309**

| Patent document cited in search report | | | Publication date (day/month/year) | Patent family member(s) | | | Publication date (day/month/year) |
|---|---|---|---|---|---|---|---|
| CN | 109565889 | A | 02 April 2019 | JP | 2020504514 | A | 06 February 2020 |
| | | | | KR | 20190018658 | A | 25 February 2019 |
| | | | | KR | 20180122562 | A | 13 November 2018 |
| | | | | US | 2019274172 | A1 | 05 September 2019 |
| | | | | US | 2020137792 | A1 | 30 April 2020 |
| | | | | EP | 3471496 | A1 | 17 April 2019 |
| | | | | WO | 2018203674 | A1 | 08 November 2018 |
| | | | | IN | 201927021807 | A | 02 October 2020 |
| CN | 111869307 | A | 30 October 2020 | WO | 2019160720 | A1 | 22 August 2019 |
| | | | | US | 2021007101 | A1 | 07 January 2021 |
| | | | | EP | 3753360 | A1 | 23 December 2020 |
| | | | | TW | 201941625 | A | 16 October 2019 |
| US | 2020100297 | A1 | 26 March 2020 | CN | 112753274 | A | 04 May 2021 |
| | | | | KR | 20200034651 | A | 31 March 2020 |
| | | | | WO | 2020060371 | A1 | 26 March 2020 |
| | | | | IN | 202137011787 | A | 02 April 2021 |
| US | 2020053779 | A1 | 13 February 2020 | CA | 3051689 | A1 | 09 February 2020 |
| | | | | EP | 3609284 | A1 | 12 February 2020 |

Form PCT/ISA/210 (patent family annex) (January 2015)